# FASCICULE DE BREVET EUROPEEN

(11) **EP 2 585 188 B1**
(45) Date de publication et mention de la délivrance du brevet: **19.08.2015**
(21) Numéro de dépôt: 11727227.8
(22) Date de dépôt: 19.05.2011
(51) Int. Cl.: E21B 43/36, B01D 17/02, E02D 29/09

(54) **DISPOSITIF MODULAIRE DE SEPARATION GRAVITAIRE LIQUIDE/LIQUIDE**
MODULARE VORRICHTUNG ZUR FLÜSSIG-FLÜSSIG-SCHWERKRAFTTRENNUNG
MODULAR DEVICE FOR LIQUID/LIQUID GRAVITY SEPARATION

(30) Priorité: 23.06.2010 FR 1054979
(43) Date de publication de la demande: 01.05.2013
(73) Titulaire: Saipem SA, 78180 Montigny-le-Bretonneux (FR)
(72) Inventeur: ABRAND, Stéphanie, F-78640 Neauphle Le Chateau (FR); HALLOT, Raymond, F-78960 Voisins Le Bretonneux (FR); BUTIN, Nicolas, F-78180 Montigny Le Bretonneux (FR)
(74) Mandataire: Domange, Maxime
(86) Numéro de dépôt international: PCT/FR2011/051128
(87) Numéro de publication internationale: WO 2011/161343

(56) Documents cités:
- WO-A1-2007/071664
- WO-A1-2009/108063
- FR-A1- 2 921 844
- US-A- 1 482 688
- US-A- 2 423 793

## Description

La présente invention concerne un séparateur liquide/liquide de type horizontal, ainsi qu'un procédé de séparation gravitaire de phases liquides de densités différentes d'un fluide, notamment les phases huileuse et aqueuse d'un pétrole brut.

Le secteur technique de l'invention est donc plus particulièrement le domaine de la production pétrolière, et plus particulièrement le domaine des champs de pétrole en mer par grande profondeur.

La production de pétrole en mer profonde est réalisée en général à partir d'un support flottant ancré à proximité des puits de pétrole situés au niveau du fond de la mer, c'est-à-dire à des profondeurs variables de 1000 à 2500m, voire plus. Le support flottant comporte en général des moyens d'ancrage pour rester en position malgré les effets des courants, des vents et de la houle. Il comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation courante de ces supports flottants est le terme anglo-saxon "Floating Production Storage Offloading" (signifiant "moyen flottant de stockage, de production et de déchargement") dont on utilise le terme abrégé "FPSO" dans l'ensemble de la description suivante.

Les têtes de puits sont en général reliées audit FPSO par des conduites sous-marines soit de type SCR, c'est-à-dire conduites suspendues en configuration de chaînette, soit de type tour hybride comprenant :
- un riser vertical dont l'extrémité inférieure est ancrée au fond de la mer et relié à une dite conduite reposant au fond de la mer, et l'extrémité supérieure est tendue par un flotteur immergé en sub-surface auquel elle est reliée, et
- une conduite de liaison, en général une conduite de liaison flexible, entre l'extrémité supérieure dudit riser et un support flottant en surface, ladite conduite de liaison flexible prenant, le cas échéant, de par son propre poids la forme d'une courbe en chaînette plongeante, c'est-à-dire descendant largement en dessous du flotteur pour remonter ensuite jusqu'audit support flottant.

L'intégralité de la production de pétrole brut est ainsi en général remontée à bord du FPSO pour y être traitée en vue de séparer le pétrole proprement dit, de l'eau, du gaz, et d'éventuels composants sablonneux. Le pétrole, une fois séparé, est alors stocké à bord, le gaz est lavé, puis envoyé vers les turbines à gaz pour la production de l'électricité et de la chaleur nécessaire à bord, puis le surplus est réinjecté dans le réservoir du champ pétrolier de manière à remettre en pression ledit réservoir. L'eau, après avoir été libérée du sable en suspension, est enfin soit rejetée à la mer après extraction poussée de toute particule d'huile, soit réinjectée elle aussi dans le réservoir, un complément d'eau de mer prélevé en sub-surface, venant en général en complément, pour atteindre le débit nécessaire d'injection d'eau dans le réservoir. Le sable extrait, qui ne représente que des quantités minimes en termes de poids, est finalement lavé puis rejeté à la mer.

On connaît la méthode de séparation de l'eau et de l'huile contenus dans un pétrole brut, couramment employée sur les installations fixes à terre qui consiste à utiliser un réservoir de très grand volume, en général de forme cylindrique allongée, le pétrole brut entrant à une extrémité et cheminant le long dudit réservoir pendant une durée de l'ordre de 5-10 mn, durant lesquelles les diverses phases se séparent naturellement par gravité pour atteindre la seconde extrémité. Ce type de séparateur ci-après dénommé « séparateur gravitaire » est en général utilisé pour du pétrole brut contenant aussi du gaz, et le gaz est alors récupéré en partie haute du réservoir, l'eau et le sable en partie basse, et le pétrole (huile) en partie intermédiaire. Il existe une très grande variété de séparateurs de ce type qui intègrent en général des dispositifs complémentaires internes, tels des écrans horizontaux, verticaux ou obliques, dont l'objet est de faciliter la séparation des phases et éviter qu'ils ne se remélangent à une étape ultérieure.

Ces séparateurs fonctionnent à basse pression, par exemple 3-10 bars, parfois même en dépression, de manière à optimiser le dégazage du pétrole brut. Ce type de séparateur peut mesurer 3-4m de diamètre et 15-20m de longueur. Ceci provient du fait que le temps de résidence doit être suffisant pour que les particules d'huile situées dans la partie basse du séparateur aient le temps de remonter vers la couche d'huile située en partie haute, et de la même manière, que les particules d'eau situées dans la partie haute du séparateur aient le temps de descendre vers la couche d'eau située en partie basse dudit séparateur. Ainsi, le temps de parcours vertical d'une particule est très élevé en raison de la hauteur, donc du diamètre même dudit séparateur.

Dans les développements de champs pétroliers, bien souvent, après quelques années de fonctionnement, de multiples petites découvertes de pétrole situées 15-30kms dudit FPSO, ne justifient pas à elles-seules l'installation d'un nouveau FPSO et on cherche alors à rediriger la production de ces nouveaux puits vers un FPSO existant. Mais, à bord dudit FPSO, les équipements de traitement du brut sont en général utilisés à plein, c'est-à-dire à 80-90% et ne sont alors pas capables de traiter l'intégralité du surplus en provenance des puits satellites distants. Par contre, le raccordement devient possible en termes de traitement, si une partie du traitement est effectué à proximité des puits satellites et que seule l'huile pré-traitée est renvoyée en surface à bord du FPSO pour un complément de traitement avant expédition. Les prétraitements recherchés sont tout d'abord un dégazage partiel du brut, le gaz étant alors directement réinjecté sur place dans des puits spécifiques, puis une séparation eau-huile, l'eau étant ensuite traité dans des séparateurs spécifiques tels des cyclones, par exemple un dispositif cyclonique décrit dans le brevet EP1951434 de la demanderesse, pour atteindre un niveau de pureté, c'est-à-dire l'absence de particules d'huile permettant, soit de réinjecter l'eau dans un puits local spécifique pour maintenir la pression dans le réservoir de pétrole, soit encore de la rejeter directement à la mer. En procédant ainsi, on ne renvoie en surface vers le FPSO que de l'huile avec le cas échéant un reliquat de gaz et un reliquat d'eau que ledit FPSO est alors à même de traiter dans les meilleures conditions.

Il est donc avantageux de fournir des dispositifs de séparation liquide/liquide installés au fond de la mer pour n'avoir à remonter en surface que la phase huileuse et non pas la phase aqueuse, laquelle peut être réinjectée sur un autre puits au fond de la mer. Si l'on souhaite installer le type de séparateur gravitaire liquide/liquide horizontal décrit ci-dessus, au fond de la mer, le réservoir doit être capable de résister à l'implosion sous l'effet de la pression qui est sensiblement de 100 bars, soit sensiblement 10MPa par tranche de 1000m d'eau. Ainsi la transposition d'un réservoir d'un tel diamètre pour son utilisation en grande et très grande profondeur nécessiterait des épaisseurs de paroi de 100 à 250mm pour résister à l'implosion et de tels éléments de chaudronnerie seraient très délicats et très coûteux à réaliser et à installer au fond de la mer à grande profondeur. Mais, réduire le diamètre et l'épaisseur du séparateur à des diamètres et épaisseurs standard de conduites sous-marines standard nécessite d'en augmenter la longueur pour pouvoir séparer une quantité suffisante de fluide au sein du séparateur. Toutefois, on ne peut pas mettre en oeuvre des conduites de séparation de trop grande longueur au risque de créer des différentiels de perte de charge entre les deux phases huileuse et aqueuse du pétrole brut qui pourrait conduire à des perturbations du fonctionnement du séparateur. Dans WO2009/108063, on décrit un dispositif de séparation gravitaire de ce type.

Dans WO 2007/054651 au nom de la demanderesse, on a décrit un dispositif de séparation liquide/liquide apte à mis en oeuvre au fond de la mer, de type « cyclone » utilisant la force centrifuge, plutôt que les séparateurs horizontaux gravitaires décrits précédemment qui utilisent la force de gravitation pour effectuer la séparation. Mais, la mise en oeuvre des séparateurs de type cyclone au fond de la mer est délicate en raison de leur point de fonctionnement qui n'autorise que peu de variations dans les rapports eau/huile et liquide/solide.

On entend ici par « point de fonctionnement », une séparation stable des volumes de phases de densité différentes à l'intérieur du cyclone.

Or, un autre problème majeur de tout développement de champ vient du fait que pendant la durée de vie du champ, le volume de gaz rapporté au m3 de brut (GOR : « gas-oil ratio », c'est à dire le ratio gaz-huile), ainsi que le pourcentage d'eau (« water-cut ») varie dans des proportions relativement importantes et rarement de manière prévisible sur la période de 20-30 ans, voire plus, d'exploitation du séparateurs. En général, le water-cut augmente jusqu'à atteindre 80-90%, voire plus, et vouloir raccorder directement un tel puits à un FPSO déjà en limite de capacité, est quasiment impossible et en général non rentable.

Un problème à la base de la présente invention est donc de fournir un séparateur liquide/liquide permettant de traiter des quantités de pétrole brut en augmentation durant la durée de vie de l'installation, c'est-à-dire provenant le cas échéant de puits supplémentaires d'une part, et d'autre part, de traiter un pétrole dont les variations dans le temps du débit du pétrole sortant du puits et/ou dont les variations de la proportion d'eau au sein du pétrole à traiter requiert de pouvoir redéfinir les paramètres de fonctionnement du séparateur et/ou de modifier la structure même du séparateur en cours de vie en termes de longueur et diamètre et débit du fluide le parcourant.

Un but de la présente invention est de fournir un dispositif de séparation liquide-liquide de type horizontal, c'est-à-dire fonctionnant par gravitation, permettant de traiter un pétrole brut partiellement ou totalement dégazé, apte à être installé et fonctionner au fond de la mer à grande profondeur, notamment au moins 1000m, qui soit plus simple et moins coûteux à réaliser, installer et mettre en oeuvre au fond de la mer et qui apporte une solution au problème d'adaptation et de modification des conditions de fonctionnement et/ou de la structure du séparateur pendant la durée de vie du séparateur comme exposé ci-dessus.

La présente invention vise donc également à fournir un dispositif de séparation liquide/liquide amélioré qui résout les problèmes mentionnés ci-dessus.

Pour ce faire, la présente invention fournit un dispositif modulaire de séparation gravitaire liquide/liquide de deux phases liquides de densités différentes d'un fluide liquide, de préférence encore les phase aqueuse et phase huileuse d'un pétrole brut, de préférence partiellement ou totalement dégazé, ledit dispositif modulaire de séparation reposant au fond de la mer, de préférence à grande profondeur d'au moins 1000 m, caractérisé en ce qu'il comprend :
a) au moins un module de séparation, de préférence une pluralité de n modules de séparation (mᵢ avec i = 1 à n et n étant de préférence un entier de 5 à 10), chaque dit module de séparation étant supporté par au moins une première embase reposant au fond de la mer, ladite première embase étant ancrée au fond de la mer par fixation sur une ancre, de préférence fixation sur une première pile du type « ancre à succion », enfoncée au fond de la mer, chaque module de séparation comprenant :
   a.1) une conduite d'amenée de fluide, s'étendant dans une direction longitudinale axiale (X₁X₁), et
   a.2) au moins une conduite de séparation gravitaire s'étendant dans une direction longitudinale axiale (X₂X₂), de préférence rectilignement et parallèlement à ladite conduite d'amenée, telle que :
      - une première extrémité de ladite conduite d'amenée est reliée à au moins une première extrémité d'au moins une conduite de séparation et,
      - la deuxième extrémité de ladite conduite d'amenée est reliée à un premier orifice de sortie d'un premier réservoir cylindrique collecteur s'étendant de préférence dans une direction longitudinale axiale Y₁Y₁ perpendiculaire à la direction longitudinale axiale X₁X₁ de ladite conduite d'amenée et ladite deuxième extrémité de chaque conduite de séparation est reliée à un deuxième orifice d'entrée d'un deuxième réservoir cylindrique collecteur, ce dernier étant de préférence disposé dans une direction longitudinale axiale Y₂Y₂ parallèle à ladite direction longitudinale axiale Y₁Y₁ dudit premier réservoir, et
   a.3) un dispositif tubulaire coudé apte à permettre le transfert dudit fluide entre ladite première extrémité de ladite conduite d'amenée et chaque dite première extrémité de chaque dite conduite de séparation dudit module de séparation, et
b) un dispositif collecteur commun supporté par une deuxième embase reposant au fond de la mer, ladite deuxième embase est ancrée au fond de la mer par fixation sur une ancre, de préférence une fixation sur une deuxième pile de type « ancre à succion » enfoncée au fond de la mer, ledit dispositif collecteur commun comprenant une première structure de support supportée par ladite deuxième embase et supportant :
   b.1) ledit premier réservoir cylindrique comportant :
      - au moins un premier orifice d'entrée, de préférence situé en partie basse dudit premier réservoir, ledit premier orifice d'entrée étant relié ou destiné à être relié à une conduite sous-marine d'alimentation reposant au fond de la mer alimentant ou destinée à alimenter ledit premier réservoir en dit fluide, et
      - une pluralité de dits premiers orifices de sortie, chaque dit premier orifice de sortie comprenant ou coopérant avec une première vanne d'obturation, au moins certains desdits premiers orifices de sortie étant reliés chacun à une dite deuxième extrémité d'une dite conduite d'amenée, lesdits premiers orifices de sortie étant disposés côte à côte dans la direction axiale longitudinale Y₁Y₁ dudit premier réservoir, et
   b.2) un dit deuxième réservoir comportant :
      - une pluralité de deuxièmes orifices d'entrée, chaque dit deuxième orifice d'entrée comprenant ou coopérant avec une deuxième vanne d'obturation, au moins certains desdits deuxièmes orifices d'entrée étant reliés chacun à une dite deuxième extrémité d'une conduite de séparation, lesdits deuxièmes orifices d'entrée étant disposés côte à côte dans la direction longitudinale axiale Y₂Y₂ dudit deuxième réservoir, et
      - au moins un deuxième orifice de sortie supérieur coopérant avec une première pompe d'export reliée ou destinée à être reliée à une première conduite d'évacuation, et
      - au moins un deuxième orifice de sortie inférieur, comprenant ou coopérant avec une deuxième pompe d'export reliée ou destinée à être reliée à une deuxième conduite d'évacuation.

Du fait de la mise en oeuvre d'un dit dispositif tubulaire coudé, les dite conduite d'amenée et dite conduite de séparation sont situées toutes les deux entre d'un côté le dispositif tubulaire coudé et de l'autre côté les deux dits premier orifice de sortie et deuxième orifice d'entrée. Il en résulte que lesdits premier et deuxième réservoirs sont situés du même côté desdites conduite d'amenée et conduite de séparation, lequel dit même côté est le côté opposé à celui dudit dispositif tubulaire coudé.

La présente invention fournit également un procédé d'utilisation d'un dispositif modulaire de séparation gravitaire liquide/liquide selon l'invention, caractérisé en ce que l'on réalise la séparation des phase huileuse et phase aqueuse d'un pétrole brut, de préférence partiellement ou totalement dégazé pouvant contenir du sable, selon les étapes successives suivantes dans lesquelles :
1) on alimente ledit premier réservoir à partir d'au moins une dite conduite sous-marine d'alimentation reposant au fond de la mer, en pétrole brut de préférence partiellement ou totalement dégazéifié dans un dispositif de séparation liquide/gaz et provenant d'un puits au fond de la mer, ladite conduite reposant au fond de la mer étant reliée à un dit premier orifice d'entrée dudit premier réservoir, et
2) on fait circuler ledit pétrole brut depuis ledit premier réservoir vers ladite conduite d'amenée, et
3) on réalise la séparation d'une phase d'huile supérieure et d'une phase aqueuse inférieure pouvant contenir du sable, par circulation dudit pétrole brut au sein de chaque dite conduite de séparation, et
4) on évacue le fluide biphasique sortant de chaque dite conduite de séparation vers un dit deuxième orifice d'entrée dudit deuxième réservoir et,
5) on évacue ladite phase huileuse depuis au moins un dit deuxième orifice de sortie supérieur par l'intermédiaire d'au moins une dite première conduite d'évacuation, de préférence jusque vers un support flottant en surface, à l'aide d'une dite première pompe, et
6) on évacue ladite phase aqueuse depuis au moins un dit deuxième orifice de sortie inférieur par l'intermédiaire d'au moins une deuxième conduite d'évacuation, à l'aide d'une dite deuxième pompe, de préférence vers un puits au fond de la mer dans lequel l'eau de ladite phase aqueuse est réinjectée.

On comprend que le dispositif de séparation modulaire selon l'invention est modulaire en ce que :
- lesdits modules de séparation peuvent être installés séparément et donc ajoutés en cours d'exploitation du dispositif de séparation selon l'invention, et donc que
- tous ou certains seulement desdits premiers orifices de sortie du premier réservoir et deuxièmes orifices d'entrée du deuxième réservoir peuvent être raccordés à un dit module de séparation.

Le dispositif de la présente invention est avantageux tout d'abord de par son caractère modulaire.

La modularité du dispositif de séparation selon l'invention permet en effet d'ajouter des modules de séparation au fur et à mesure que l'on exploite des puits supplémentaires. Pour ce faire, ledit dispositif de séparation peut être alimenté à partir d'une pluralité de conduites d'alimentation reposant au fond de la mer provenant d'une pluralité de puits, reliées à un même dit premier orifice d'entrée dudit premier réservoir ou à une pluralité de premiers orifices d'entrée du premier réservoir.

D'autre part, on sait que la proportion d'eau et/ou la composition de la phase huileuse d'un pétrole brut peuvent entraîner des modifications de la courbe de viscosité en fonction de la pression et de la température du pétrole brut, ces variations requérant le cas échéant l'ajout ou le retrait de modules de séparation pour obtenir un fonctionnement optimal du dispositif de séparation.

La modularité du dispositif de séparation de la présente invention est également avantageuse en ce qu'elle permet d'ajouter ou enlever des modules de séparation en cours d'exploitation du dispositif pour modifier le débit de circulation du fluide en fonction de la proportion d'eau (« water cut ») du fluide à traiter et plus généralement en fonction des caractéristiques physico-chimiques du fluide à traiter, lesquelles ont un impact sur le débit et les pertes de charges au sein des conduites de séparation, notamment en ce qui concerne la viscosité du fluide.

La mise en oeuvre d'une dite conduite d'amenée disposée par rapport à la ou aux dites conduite(s) de séparation, comme décrit ci-dessus, permet d'alimenter en fluide lesdites premières extrémités par l'intermédiaire desdites conduites d'amenée et d'évacuer le fluide une fois séparé, desdites conduites de séparation au niveau de leurs dites deuxièmes extrémités toutes situées d'un même côté et pouvant donc être raccordées à un dispositif collecteur commun regroupant lesdits premier et deuxième réservoirs et une pluralité d'éléments de raccordement au niveau desdits premiers orifices de sortie et dits deuxièmes orifices d'entrée.

De surcroît, la mise en oeuvre d'un dit dispositif collecteur commun permet également de regrouper la pluralité des éléments de raccordement au niveau desdits premiers orifices d'entrée et dits deuxièmes orifices de sortie supérieur et inférieur destinés à être reliés aux dites conduites reposant au fond de la mer et respectivement à desdites première et deuxième conduites d'évacuation.

Il est important de signaler ici que le fait que tous les éléments de raccordement puissent être solidaires et en position fixe, et regroupés sur un même dispositif collecteur commun facilite considérablement, la précision des positionnements et donc l'exécution des raccordements suivants :
- le positionnement et le raccordement du dispositif collecteur sur sa dite deuxième embase au fond de la mer et
- les raccordements desdites conduites reposant au fond de la mer et dites première et deuxième conduites d'évacuation avec lesdits premiers orifices d'entrée et respectivement dits deuxièmes orifices de sortie supérieurs et inférieurs, et
- les positionnements et raccordements desdits modules de séparation par rapport et respectivement avec lesdits premiers orifices de sortie et deuxièmes orifices d'entrée dudit dispositif collecteur commun.

Si l'on devait mettre en oeuvre un dit premier réservoir à une première extrémité d'une conduite de séparation et un dit deuxième réservoir à l'autre extrémité de la conduite de séparation sans mettre en oeuvre de conduite d'amenée, dans ce cas, la grande distance séparant les éléments de raccordement aux deux extrémités de la conduite de séparation rendraient le positionnement et la réalisation du raccordement en deux points éloignés aux deux extrémités plus difficiles.

Enfin, la mise en oeuvre d'une pluralité de modules de séparation permet la mise en oeuvre de conduites sous-marines standard à titre de conduite d'amenée et de conduite de séparation, notamment des conduites de diamètre et épaisseur standard résistant à l'implosion due à la pression au fond de la mer, tout en évitant, grâce aux conduites d'amenée entre autres, la mise en oeuvre de conduites de séparation de trop grande longueur et les problèmes qui en découlent mentionnés ci-dessus.

Le dispositif, selon la présente invention, permet de réaliser un dispositif de séparation liquide/liquide au fond de la mer avec des conduite d'amenée et conduite de séparation réalisées à partir de conduites sous-marines d'exploitation pétrolière de diamètre et épaisseur standards, notamment des diamètres de 6 pouces à 30 pouces (150 mm à 750 mm).

On comprend que chaque première ou deuxième pompe est apte à pomper un liquide au sein dudit deuxième réservoir et à le faire circuler sous pression au sein d'une dite première ou deuxième conduite d'évacuation.

De préférence, lesdites conduites et dits réservoirs sont disposés tels que :
- chaque dite conduite de séparation gravitaire s'étend rectilignement dans une direction longitudinale (X₂X₂) située dans un même plan que la direction longitudinale (X₁X₁) de ladite conduite d'amenée, de préférence parallèlement à ladite conduite d'amenée (6), et
- ledit deuxième réservoir cylindrique collecteur (4) est disposé dans une direction longitudinale axiale (Y₂Y₂) parallèle à ladite direction longitudinale axiale (Y₁Y₁) dudit premier réservoir, et
- les directions longitudinales (X₁X₁) de l'ensemble desdites conduites d'amenée sont disposées parallèlement entre elles, et
- les directions longitudinales (X₂X₂) de l'ensemble desdites conduites de séparation (7) sont disposées parallèlement entre elles,

Dans un mode préféré de réalisation, ledit dispositif collecteur commun comprend :
i) un dit premier réservoir dans lequel :
   - ledit premier orifice d'entrée comprend une première portion de conduite d'entrée dont l'extrémité, maintenue en position fixe par rapport à ladite première structure support, comporte un premier élément de raccordement raccordé ou destiné à être accordé à un premier élément de raccordement complémentaire à l'extrémité de ladite conduite sous-marine d'alimentation, de préférence ladite première portion de conduite d'entrée étant une portion première portion de conduite rigide dont ledit premier élément de raccordement est maintenu en position fixe en sous-face de ladite première structure de support, et
   - chaque dit premier orifice de sortie comprend une première portion de conduite de sortie rigide, dont l'extrémité, maintenue en position fixe par rapport à ladite première structure support, comprend un deuxième élément de raccordement raccordé ou destiné à être raccordé à un deuxième élément de raccordement complémentaire à une dite deuxième extrémité de conduite d'amenée, et
ii) un dit deuxième réservoir dans lequel :
   - chaque dit deuxième orifice d'entrée comprend une deuxième portion de conduite rigide dont l'extrémité, maintenue en position fixe par rapport à ladite première structure support comporte un troisième élément de raccordement, raccordé ou destiné à être raccordé à un troisième élément de raccordement complémentaire à une dite deuxième extrémité de conduite de séparation, et
   - chaque dit deuxième orifice de sortie supérieur est relié à une dite première pompe supportée par ladite première structure de support, ladite première pompe étant reliée par un quatrième élément de raccordement à une dite première conduite d'évacuation, de préférence par l'intermédiaire d'une première portion de conduite d'évacuation dont l'extrémité comporte un dit quatrième élément de raccordement, ledit quatrième élément de raccordement étant maintenu en position fixe par rapport à ladite première structure support, de préférence encore en sous-face de ladite première structure support, ledit quatrième élément de raccordement étant raccordé ou destiné à être raccordé à un quatrième élément de raccordement complémentaire à l'extrémité de ladite première conduite d'évacuation, et
   - chaque dit deuxième orifice de sortie inférieur est relié à une deuxième pompe supportée par ladite première structure de support, ladite deuxième pompe étant reliée par un cinquième élément de raccordement à une dite deuxième conduite d'évacuation, de préférence par l'intermédiaire d'une deuxième portion de conduite d'évacuation, dont l'extrémité comporte un dit cinquième élément de raccordement, ledit cinquième élément de raccordement étant maintenu en position fixe par rapport à ladite première structure support, de préférence encore en sous-face de ladite première structure support, ledit cinquième élément de raccordement étant raccordé ou destiné à être raccordé à un cinquième élément de raccordement complémentaire de l'extrémité d'une dite deuxième conduite d'évacuation, et
   - lesdits premier, quatrième et cinquième éléments de raccordement complémentaires situés aux extrémités des dite conduite sous-marine d'alimentation reposant au fond de la mer et respectivement dites première et deuxième conduites d'évacuation, sont supportés par ladite deuxième embase et maintenus en position fixe en surface d'une première plateforme de ladite deuxième embase.

On comprend que les extrémités desdites première et deuxième portions de conduite rigide tiennent en position fixe par rapport à ladite première structure support, par elles-mêmes, de par la rigidité desdites première et deuxième portions de conduite, c'est-à-dire sans fixation ou soutien spécifique sur ladite première structure de support.

De façon connue de l'homme de l'art, lesdits éléments de raccordement et éléments complémentaires de raccordement sont constitués par des parties mâle et respectivement femelle de connecteurs automatiques tu type à mâchoires, commercialisés par les Sociétés Cameron (France) ou Vetco (USA).

Dans une première variante de réalisation, ladite conduite d'amenée présente un diamètre inférieur à celui de la conduite de séparation et est disposée au-dessus de la conduite de séparation.

Dans une variante préférée de réalisation, ledit module de séparation comporte une conduite d'amenée supérieure disposée au-dessus d'au moins deux conduites de séparation inférieures.

On comprend que dans ce cas, ledit dispositif de liaison coudée, notamment en forme de Y ou de T présente un canal supérieur se divisant en deux canaux inférieurs alimentant lesdites premières extrémités des deux conduites de séparation.

Les modules de séparation doubles ainsi obtenus sont intéressants, car on peut mettre en oeuvre deux conduites de séparation pour le coût de seulement 3 connecteurs automatiques de raccordement au lieu de 4 connecteurs si chacune des conduites de séparation était alimentée par une conduite d'amenée différente, alors que le coût unitaire des connecteurs automatique est extrêmement élevé et constitue le coût principal d'un module de séparation.

Plus particulièrement, le diamètre intérieur de la conduite d'amenée est compris entre 30 et 100%, de préférence entre 50 et 100% du diamètre intérieur de la conduite de séparation.

Dans une autre variante de réalisation, un dit module de séparation comporte une dite conduite d'amenée et dite conduite de séparation disposées côte à côte à une même profondeur et de même diamètre.

Ce mode de réalisation est particulièrement avantageux, car il permet de commencer la séparation dès la circulation du fluide dans la conduite d'amenée pour autant que celle-ci ait bien sûr un diamètre suffisant comme celui de la conduite de séparation. En procédant ainsi, on peut diminuer par deux la longueur du module de séparation ; en particulier, de manière à ce que la longueur des modules de séparation L reste inférieure à 50 m, de préférence inférieure à 30 m.

Selon une autre caractéristique particulière, tous lesdits modules de séparation sont supportés par une même et unique dite première embase, ladite première embase s'étendant dans une direction longitudinale Y₃Y₃ perpendiculaire aux directions longitudinales XX',X₁X₁,X₂X₂ desdits modules de séparation et ladite première embase étant située dans la direction longitudinale XX' desdits modules de séparation à une distance L1 desdites premières extrémités desdits modules de séparation égale à une valeur de 1/3 à 1/2 de la longueur totale L desdits modules de séparation à partir desdites premières extrémités desdits modules de séparation.

Avantageusement encore, ledit module de séparation comporte des éléments mécaniques de renfort assurant une liaison rigide entre ladite conduite d'amenée et la ou lesdites conduites de séparation, de préférence sur toute leur longueur.

On comprend que ces éléments de renfort mécaniques maintiennent la linéarité des conduites de séparation et notamment évitent leur fléchissement dans la partie s'étendant entre lesdites première et deuxième embases lorsque l'on met en oeuvre une seule dite première embase de soutien desdits modules de séparation.

Avantageusement encore, un dispositif modulaire de séparation gravitaire liquide/liquide selon l'invention comporte une conduite de dérivation à partir dudit deuxième orifice de sortie supérieur ou de ladite première conduite d'évacuation et/ou une conduite de dérivation à partir dudit deuxième orifice de sortie inférieur ou de ladite deuxième conduite d'évacuation, de préférence à l'aide d'une vanne trois voies, de façon à transférer dans une dite conduite sous-marine d'alimentation reposant au fond de la mer alimentant ledit premier réservoir, une fraction du liquide sortant dudit deuxième orifice de sortie supérieur ou respectivement dit deuxième orifice de sortie inférieur, de préférence encore en transférant ladite fraction de liquide dans un mélangeur situé au niveau de ladite conduite sous-marine d'alimentation reposant au fond de la mer.

Avantageusement, ladite première embase coopère avec des premiers vérins aptes à régler l'horizontalité ou l'inclinaison desdits modules de séparation par rapport à l'horizontale et/ou et ladite deuxième embase coopère avec des deuxièmes vérins aptes à régler l'horizontalité ou l'inclinaison desdits modules de séparation et/ou l'horizontalité ou l'inclinaison desdits premier et deuxième réservoirs par rapport à l'horizontale.

Dans un mode particulier de réalisation du procédé d'utilisation du dispositif de séparation modulaire selon l'invention, on met en oeuvre un dispositif modulaire de séparation liquide/liquide dont au moins un dit premier orifice de sortie et un dit deuxième orifice d'entrée aptes à être raccordés à un même module de séparation, sont fermés et non raccordés à un dit module de séparation, et, après mise en oeuvre des étapes 1) à 6) dudit procédé d'utilisation défini ci-dessus, on réalise les étapes successives suivantes dans lesquelles :
7.1) on ajoute un dit module de séparation que l'on descend depuis la surface et dont on raccorde lesdites deuxièmes extrémités desdites conduite d'amenée et respectivement conduite de séparation au dit premier orifice de sortie et respectivement dit deuxième orifice d'entrée inoccupés, puis
8.1) on ouvre lesdites vannes d'obturation desdits premier orifice de sortie et dit deuxième orifice d'entrée.

Dans un autre mode de réalisation du procédé d'utilisation du dispositif selon l'invention, on met en oeuvre un dispositif modulaire de séparation liquide/liquide comportant plus de deux modules de séparation, et, après mise en oeuvre des étapes 1) à 6) définies ci-dessus, on réalise les étapes successives suivantes dans lesquelles :
7.2) on referme lesdites vannes d'obturation d'un dit premier orifice de sortie et d'au moins un dit deuxième orifice d'entrée raccordé à un même module de séparation, et
8.2) on désolidarise ledit module de séparation raccordé au dit premier orifice de sortie et dit deuxième orifice d'entrée dont les vannes sont fermées, puis on remonte en surface ledit module de séparation désolidarisé.

Dans un autre mode de réalisation du procédé d'utilisation du dispositif de l'invention, aux étapes 5) et/ou 6), on prélève une fraction du liquide évacué à partir dudit deuxième orifice de sortie supérieur et/ou respectivement dudit deuxième orifice de sortie inférieur, que l'on réinjecte sur ladite conduite sous-marine d'alimentation pour mélanger ladite fraction de liquide avec le pétrole brut d'alimentation et ainsi modifier la proportion d'eau du pétrole brut entrant dans ledit dispositif modulaire de séparation.

Ce mode de réalisation est particulièrement avantageux, pour éviter que le pétrole brut ne se situe dans une proportion d'eau à proximité de son point d'inversion, comme explicité dans la description détaillée ci-après.

Les pétroles bruts ont en général une viscosité qui dépend de leurs caractéristiques physico-chimiques propres et connaissent une perte de charge dépendant de cette viscosité, ainsi que des caractéristiques propres de chaque conduite de séparation. Ainsi, en général l'émulsion sortant du puits a une viscosité qui varie selon sa proportion en eau (« water-cut ») et qui présente un point singulier pour un certain pourcentage d'eau, variable d'un brut à l'autre. Ce point, connu de l'homme de l'art, est appelé point d'inversion. Lorsque le « water-cut » se rapproche du point d'inversion, la viscosité du brut augmente, atteint un maximum au point d'inversion, puis diminue lorsque ledit point d'inversion est dépassé. On cherche à éviter de se trouver dans la zone proche du point d'inversion, car si le « water-cut » est instable, il se crée alors au niveau des différents modules de séparation des déséquilibres de pertes de charge qui risquent de perturber fortement, voire bloquer le processus de séparation.

Cette caractéristique de procédé est particulièrement avantageuse pour permettre le point de fonctionnement du séparateur soit suffisamment éloigné du point d'inversion redouté tel que décrit dans la description détaillée qui va suivre. Le point d'inversion correspond à une viscosité maximale du pétrole brut concerné, laquelle est obtenue pour une proportion en eau particulière. On risque donc de se retrouver au niveau du point d'inversion si la proportion en eau est instable dans le pétrole brut traité.

Dans un autre mode de réalisation du procédé d'utilisation d'un dispositif selon l'invention, après mise en oeuvre d'une séparation selon les étapes 1) à 6) définies ci-dessus, on réalise le nettoyage d'au moins un module de séparation pour évacuer le sable éventuellement déposé au fond de sa dite conduite de séparation en réalisant les étapes successives suivantes dans lesquelles :
7.3) on ouvre lesdites vannes d'obturation desdits premiers orifices de sortie et/ou dits deuxièmes orifices d'entrée du ou des modules de séparation à nettoyer et on ferme les vannes d'obturation desdits premiers orifices de sorties et/ou desdits deuxièmes orifices d'entrée auxquels sont raccordés les autres modules de séparation en plus grand nombre que les modules de séparation à nettoyer, de préférence un seul module de séparation étant à nettoyer et maintenu en communication ouverte avec lesdits premiers orifices de sortie et dits deuxièmes orifices d'entrée, et
8.3) on fait circuler à un débit accéléré ledit pétrole brut au sein du ou desdits modules de séparation à nettoyer exclusivement, et
9.3) on expédie vers la surface par l'intermédiaire dudit deuxième orifice de sortie supérieur l'intégralité du fluide sortant dudit deuxième réservoir, ladite deuxième pompe coopérant avec ledit deuxième orifice de sortie inférieur n'étant pas activée.

On comprend que l'accélération du débit de circulation du fluide à l'étape 8.3) résulte de ce que certains modules de séparation ont été fermés.

La présente invention a également pour objet un procédé d'installation au fond de la mer d'un dispositif modulaire de séparation gravitaire liquide/liquide selon l'invention, caractérisé en ce que l'on réalise les étapes suivantes dans lesquelles :
1) on descend depuis la surface un dit dispositif collecteur commun que l'on dépose sur une dit deuxième embase ancrée au fond de la mer et on raccorde lesdits premier orifice d'entrée et dits deuxième orifices de sortie supérieur et inférieur à desdites première et deuxième conduites d'évacuation, et
2) on descend depuis la surface au moins un dit module de séparation que l'on dépose sur une première embase ancrée au fond de la mer et on raccorde lesdites deuxièmes extrémités desdites conduite d'amenée et conduite de séparation avec lesdits premiers orifices de sortie et respectivement dits deuxièmes orifices d'entrée dudit dispositif collecteur commun.

En pratique, un dispositif de séparation modulaire gravitaire selon l'invention présentera avantageusement les caractéristiques dimensionnelles suivantes :
- premier réservoir :
   - volume = 0.15 à 8 m³
   - longueur = 2 à 10 m
   - diamètre = 200 à 1000 mm
- deuxième réservoir :
   - volume = 0.15 à 8 m³
   - longueur = 2 à 10 m
   - diamètre = 200 à 1000 mm
- conduite d'amenée :
   - diamètre = 100 à 300 mm
   - épaisseur d'acier = 6 à 30 mm
   - longueur L = 15 à 75 m
- conduite de séparation (en cas de conduite unique) :
   - diamètre = 150 à 500 mm
   - épaisseur d'acier = 6 à 40 mm
   - longueur L = 15 à 75 m
- nombre de modules de séparation = 3 à 15
- rendement de traitement = 7.5 à 1000 m³/heure de pétrole brut,
- profondeur d'installation = 500 à 3000 m

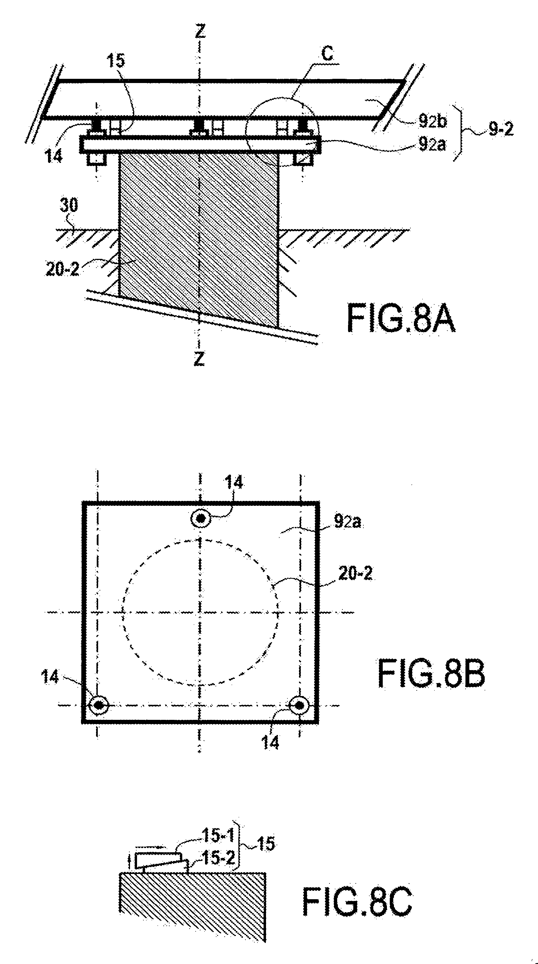

D'autres caractéristiques et avantages de la présente invention apparaîtront à la lumière de la description détaillée des modes de réalisation qui va suivre, en référence aux figures 1 à 8, dans lesquelles :
- la figure 1 est une vue de côté d'un séparateur sous-marin horizontal modulaire selon l'invention reposant sur deux ancres à succion installée au fond de la mer,
- les figures 1A et 1B sont des vues de côté illustrant des phases de l'installation du séparateur, conduisant à la configuration finale de la figure 1,
- la figure 2 est une vue de dessus du dispositif de la figure 1,
- la figure 3 est une vue selon l'axe XX d'un module de séparation bi-tube reposant sur une poutre support transversale réglable 9-1b en dévers par rapport à une ancre à succion,
- la figure 4 est une vue de dessus illustrant un mode de balayage, d'une conduite séparateur d'un module en référence à la figure 3, dans laquelle l'intégralité du flux de pétrole est dirigé vers une seule dite conduite séparateur en vue de mettre les particules solides de sable en suspension et de les envoyer directement en surface pour traitement à bord du FPSO,
- la figure 5 est une vue selon l'axe XX d'un module de séparation mono-tube à double parcours reposant sur une dite poutre transversale 9-1b,
- les figures 6A et 6B décrivent une conduite de séparation en vue de côté et en coupe transversale équipée de dispositifs internes 16 visant à créer des turbulences,
- la figure 7A est un diagramme résultant d'un calcul illustrant les pertes de charges au sein d'une conduite correspondant à un water cut éloigné du point d'inversion,
- la figure 7B est un diagramme similaire au diagramme de la figure 6A, résultant d'un calcul illustrant les pertes de charges au sein d'une conduite correspondant à un water cut proche du point d'inversion,
- la figure 7C est une vue de dessus d'un dispositif complémentaire de l'invention permettant d'éviter les modes de fonctionnement proches du point d'inversion, par recyclage d'une partie de l'eau traitée, ce qui a pour effet de modifier la valeur dudit water cut du pétrole brut entrant dans le séparateur.
- les figures 8A et 8B sont des vues de côté et de dessus des deuxièmes vérins 14 supportés par ladite deuxième embase 9-2 et supportant ladite structure support 2 du dispositif collecteur 1b.
- la figure 8C est une illustration d'un moyen de calage 15 permanent après réglage de l'horizontalité de la structure support 2 à l'aide des deuxièmes vérins 14 sur l'embase 9-2 représentée en vue de dessus sur la figure 8B.

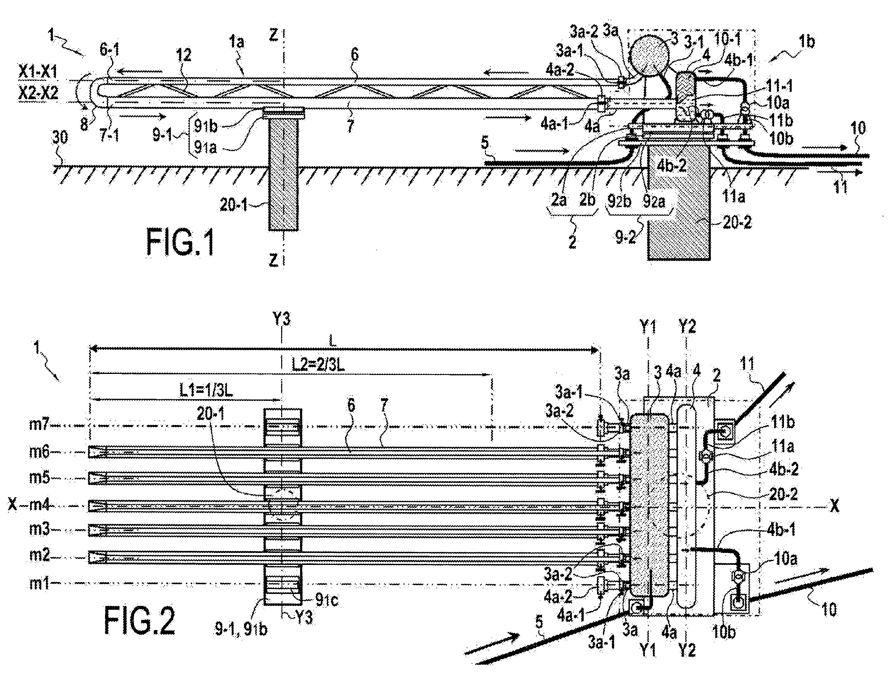

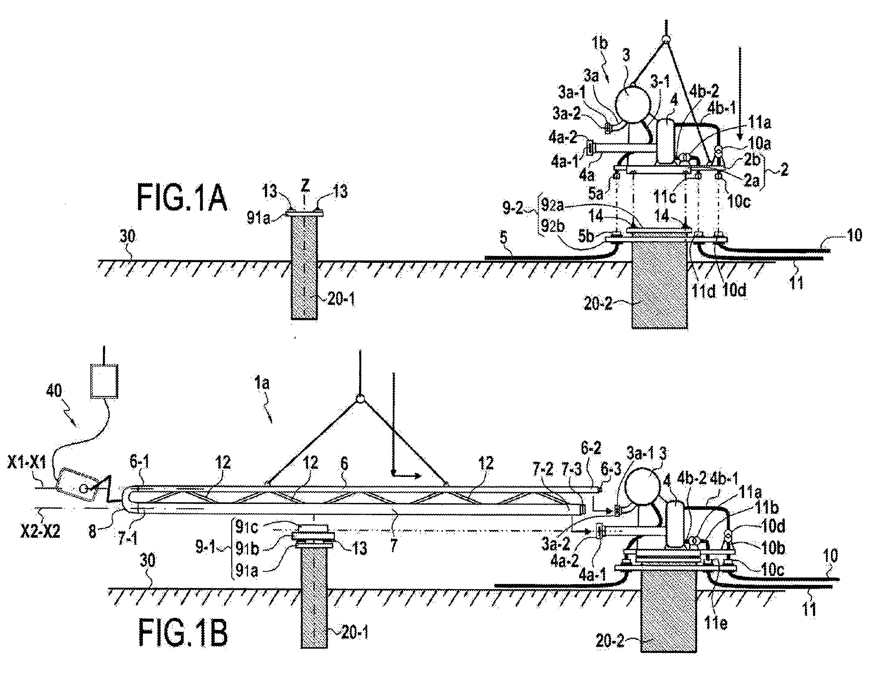

Sur les figures 1 et 2, on a représenté un dispositif modulaire de séparation gravitaire liquide/liquide 1 des phase aqueuse 11-1 et phase huileuse 10-1 de densités différentes d'un pétrole brut, de préférence partiellement ou totalement dégazé. Ledit dispositif modulaire de séparation 1 repose au fond de la mer 30, et peut reposer à grande profondeur d'au moins 1000 m.

Le dispositif modulaire de séparation gravitaire liquide/liquide 1 selon l'invention comprend une pluralité de modules de séparation 1a raccordés à un dispositif collecteur commun 1b. Chaque module de séparation 1a comprend une conduite d'amenée de fluide 6 et au moins une conduite de séparation gravitaire 7 sensiblement de même longueur, disposée au-dessous, rectilignement et parallèlement à la conduite d'amenée 6. Un dispositif tubulaire coudé 8 relie une première extrémité 6-1 de la conduite d'amenée 6 à une première extrémité 7-1 de chacune des conduites de séparation.

Le dispositif collecteur commun 1b comprend un premier réservoir 3 alimenté en pétrole brut par une conduite d'alimentation reposant au fond de la mer 5 via un premier orifice d'entrée 3-1. Le premier réservoir 3 comprend une pluralité de premiers orifices de sortie 3a raccordés à une pluralité des conduites d'amenée 6 d'une pluralité de modules de séparation 1a, au niveau des deuxièmes extrémités 6-2 desdites conduites d'amenée 6 et les alimentant en pétrole brut.

Deux phases aqueuse 11-1 et huileuse 10-1 sont séparées au sein des conduites de séparation 7 avant d'être déversées dans un deuxième réservoir 4 par l'intermédiaire des deuxièmes orifices d'entrée 4a dudit deuxième réservoir auxquels sont raccordées les deuxièmes extrémités 7-2 des conduites de séparation 7. La phase huileuse 10-1 est véhiculée en surface depuis un orifice de sortie supérieur 4b-1 du deuxième réservoir 4 à l'aide d'une pompe 10a et à travers une première conduite d'évacuation 10. La phase aqueuse 11-1 est véhiculée au fond de la mer 30 à l'aide d'une deuxième pompe 11a et à travers une deuxième conduite d'évacuation 11, de préférence pour être réinjectée vers un autre puits à proximité, depuis un orifice de sortie inférieur 4b-2 du deuxième réservoir 4.

Sur la figure 2, le dispositif peut être raccordé à :
1) 7 modules de séparation 1a, mᵢ avec i = 1 à 7, tous les modules de séparation 1a, mᵢ pouvant être supportés par une même et unique première poutre transversale support 9-1b d'une première embase 9-1 fixée au sommet d'une première pile 20-1 de type « ancre à succion », enfoncée au fond de la mer 30. Ladite première embase 9-1 comporte une plateforme inférieure 9-1a disposée au sommet de la première pile 20-1 et supportant des premiers vérins 13, lesquels premiers vérins 13 supportent une première poutre transversale support 9-1b s'étendant dans une direction transversale Y₃Y₃.

Le premier réservoir cylindrique collecteur 3 s'étend dans une direction longitudinale axiale Y₁Y₁ perpendiculaire aux directions longitudinales axiales X₁X₁ de la conduite d'amenée 6 et X₂X₂ des conduites de séparation 7. Le deuxième réservoir cylindrique collecteur 4 est disposé dans une direction longitudinale axiale Y₂Y₂ parallèle à ladite direction longitudinale axiale Y₁Y₁ dudit premier réservoir 3.

Le dispositif collecteur commun 1b comprend une première structure support 2, cette dernière supportant lesdits premier et deuxième réservoirs 3 et 4. Ladite première structure support 2 est elle-même supportée par une deuxième embase 9-2 reposant au fond de la mer 30. La deuxième embase 9-2 est fixée au sommet d'une deuxième pile 20-2 de type « ancre à succion » enfoncée au fond de la mer 30.

Le premier orifice d'entrée 3-1 est situé en partie basse dudit premier réservoir, il comprend une première portion de conduite d'entrée dont l'extrémité comporte un premier élément de raccordement 5a raccordé ou destiné à être raccordé à un premier élément de raccordement complémentaire 5b à l'extrémité de la conduite sous-marine d'alimentation 5. Ledit premier élément de raccordement 5a est maintenu en position fixe en sous-face d'une première plateforme 2b de ladite première structure support 2.

Chaque dit premier orifice de sortie 3a comprend une première portion de conduite de sortie rigide coudée, dont l'extrémité, comprend un deuxième élément de raccordement 3a-2 raccordé ou destiné à être raccordé à un deuxième élément de raccordement complémentaire 6-3 d'une dite deuxième extrémité 6-2 de la conduite d'amenée 6. Le deuxième élément de raccordement 3a-2 est maintenu en position fixe par rapport à la première structure support 2, du fait que ladite première portion de conduite de sortie coudée 3a est rigide et relativement courte d'une part, et du fait que le premier réservoir 3 est lui-même supporté et fixé sur ladite plateforme supérieure 2b de la première structure support 2.

Chacun des 7 deuxièmes éléments de raccordement 3a-2 comprend ou coopère avec une première vanne d'obturation 3a-1. Lesdits premiers orifices de sortie 3a sont disposés côte à côte dans la direction axiale longitudinale Y₁Y₁ du premier réservoir 3. Cinq desdits premiers orifices de sortie 3a seulement, à savoir ceux des séparateurs m₂ à m₆ sont reliés chacun à une dite deuxième extrémité 6-2 d'une conduite d'amenée 6.

Chaque dit deuxième orifice d'entrée 4a comprend une deuxième portion de conduite rigide dont l'extrémité comporte un troisième élément de raccordement 4a-2, raccordé ou destiné à être raccordé à un troisième élément de raccordement complémentaire 7-3 à une dite deuxième extrémité 7-2 de la conduite de séparation 7. Ledit troisième élément de raccordement 4a-2 est maintenu en position fixe par rapport à ladite première structure support 2,2a du fait que la première portion de conduite d'entrée 4a est rigide et relativement courte d'une part, et que d'autre part, le deuxième réservoir est lui-même supporté et maintenu en position fixe par rapport à ladite plateforme supérieure 2b de la première structure support 2. Chacun des 7 troisièmes éléments de raccordement 4a-2 comprend ou coopère avec une deuxième vanne d'obturation 4a-1. Lesdits deuxièmes orifices d'entrée 4a sont disposés côte à côte dans la direction longitudinale axiale Y₂Y₂ dudit deuxième réservoir 4. Cinq desdits deuxièmes orifices d'entrée 4a seulement, à savoir ceux des modules de séparation m₂ à m₆, sont reliés à une dite deuxième extrémité 7-2 d'une conduite de séparation 7.

Les premiers orifices de sortie 3a dudit premier réservoir 3 sont disposés de l'autre côté du plan axial longitudinal vertical du premier réservoir 3 par rapport au dit premier orifice d'entrée 3-1. Et, lesdits deuxièmes orifices de sortie supérieur 4b-1 et inférieur 4b-2 du deuxième réservoir 4 sont disposés de l'autre côté du plan axial longitudinal vertical du deuxième réservoir 4 par rapport au dit deuxièmes orifices d'entrée 4a.

Ledit deuxième orifice de sortie supérieur 4b-1 est relié à une dite première pompe d'export 10a supportée par la plateforme supérieure transversale 2b de ladite première structure 2,2a. Ladite première pompe 10a est elle-même reliée à une première conduite d'évacuation 10 par l'intermédiaire d'une première portion de conduite d'évacuation 10b comportant à son extrémité un quatrième élément de raccordement 10c. Ledit quatrième élément 10c est maintenu en position fixe en sous-face de ladite plateforme supérieure 2b de ladite première structure support 2. Ledit quatrième élément de raccordement 10c est raccordé ou destiné à être raccordé à un quatrième élément de raccordement complémentaire 10d à l'extrémité de ladite première conduite d'évacuation (10).

Ledit deuxième orifice de sortie inférieur 4b-2 est relié à une dite deuxième pompe d'export 11a supportée par la plateforme supérieure 2b de ladite première structure support 2. Ladite deuxième pompe 11a est elle-même reliée à une deuxième conduite d'évacuation 11 par l'intermédiaire d'une deuxième portion de conduite d'évacuation 11b, celle-ci comportant à son extrémité un cinquième élément de raccordement 11d. Ledit cinquième élément de raccordement 11d est raccordé ou destiné à être raccordé à un cinquième élément de raccordement complémentaire 11d de l'extrémité d'une dite deuxième conduite d'évacuation 11.

Lesdits premier, quatrième et cinquième éléments de raccordement complémentaires 5b, 10d, 11d, situés aux extrémités desdites conduite sous-marine d'alimentation reposant au fond de la mer (5) et respectivement dites première et deuxième conduites d'évacuation (10,11), sont supportés par une première plateforme 9₂b de ladite deuxième embase 9-2, maintenus en position fixe en surface de ladite première plateforme 9₂b de ladite deuxième embase 9-2.

Les différents premier, deuxième, troisième, quatrième et cinquième éléments de raccordement sont constitués par des parties mâles ou femelles de connecteurs automatiques connus de l'homme de l'art, tandis que les premier, deuxième, troisième, quatrième et cinquième éléments de raccordement complémentaires sont constitués respectivement par des parties femelles ou respectivement mâles de dits connecteurs automatiques.

Lesdits premiers orifices de sortie dudit premier réservoir sont disposés de l'autre côté du plan axial longitudinal vertical dudit premier réservoir dans la direction XX, par rapport au dit premier orifice d'entrée et lesdits deuxièmes orifices de sortie supérieur et inférieur dudit deuxième réservoir sont disposés de l'autre côté du plan axial longitudinal vertical du deuxième réservoir, dans la direction XX, par rapport aux dits deuxièmes orifices d'entrée.

Le premier réservoir 3 est constitué d'un réservoir cylindrique à section circulaire. Il est alimenté par l'intermédiaire de la conduite sous-marine d'alimentation 5 débouchant sur la première conduite d'entrée 3-1 en pétrole brut partiellement dégazé dans une installation sous-marine non représentée en provenance d'un puits éloigné.

Le deuxième réservoir 4, encore appelé « réservoir collecteur » est représenté avec une forme sensiblement parallélépipédique sur les figures pour mieux le distinguer du premier réservoir 3. Toutefois, de préférence, le deuxième réservoir 4, comprend une section transversale circulaire avec des fonds bombés pour mieux résister à la pression de fond.

Ce deuxième réservoir 4, reçoit les fractions eau 11-1 et huile 10-1 du pétrole après séparation, la fraction huile 10-1 étant évacuée par l'orifice de sortie supérieure 4b-1, tandis que la fraction aqueuse 11-1 est évacuée par l'orifice de sortie inférieur 4b-2.

La première pompe 10b envoie l'huile 10-1 sous pression à travers la première conduite d'évacuation 10 débouchant au niveau d'un support flottant de type FPSO situé en surface à plusieurs kilomètres de distance.

La deuxième pompe 11b envoie la phase aqueuse 11-1 sous pression vers un puits de réinjection non représenté par l'intermédiaire de la deuxième conduite d'évacuation 11 reliant le puits d'injection d'eau situé à proximité.

La séparation proprement dite est effectuée dans chacun des modules de séparation m₂ à m₆, 1a en configuration d'épingle à cheveux. Chaque module de séparation m₂ à m₆ est constitué d'une conduite supérieure d'amenée 6 de pétrole brut situé au-dessus de la conduite de séparation proprement dite 7. La première extrémité ou extrémité gauche 6-1 de la conduite d'amenée 6 est reliée de manière étanche à l'extrémité gauche ou première extrémité 7-1 de la conduite de séparation 7 par une portion de conduite de transition cintrée en U 8 et présentant une variation de diamètre, de préférence continu, pour passer du diamètre D6 au diamètre supérieur D7 de la conduite 7. Au niveau de la première extrémité 6-1 de la conduite 6, le pétrole brut est un mélange eau-huile qui constitue une émulsion. Puis, lors de la progression régulière du fluide dans la conduite de séparation 7, l'effet de la pesanteur agissant sur les deux fluides de densités différentes, les particules d'huile migrent naturellement vers le haut et les particules d'eau vers le bas au sein de la conduite de séparation 7. La séparation est en général complètement achevée à une longueur L2 représentant au moins 1/2 ou 2/3 de la longueur L des conduites de séparation 7 depuis lesdites premières extrémités 7-1.

Des éléments de renfort mécanique 12 reliant le conduite d'amenée 6 et conduite de séparation 7 donnent à l'ensemble en épingle à cheveux ainsi constitué une grande inertie et une grande rigidité dans le plan vertical, ce qui garantit une excellente linéarité de la conduite de séparation 7. Du fait que les conduites de séparation 7 reposent sur des berceaux 9₁c disposés par-dessus la poutre supérieure 9₁b dont l'axe longitudinal transversal Y₃Y₃ est situé environ à une distance L₁ de 1/3 de la distance L depuis la première extrémité 7-1, la flèche éventuelle de la partie des conduites de séparation 7 entre la première embase 9-1 et la deuxième embase 9-2 est très extrêmement faible. Les premiers vérins 13 supportés par une plateforme inférieure 9₁a au sommet de la première pile 20-1 et supportant ladite poutre supérieure transversale 9₁b, permettent d'ajuster la hauteur et l'horizontalité ou l'inclinaison de ladite poutre supérieure 9₁b et donc permet d'ajuster la hauteur et l'horizontalité ou l'inclinaison de l'ensemble des modules de séparation 1a.

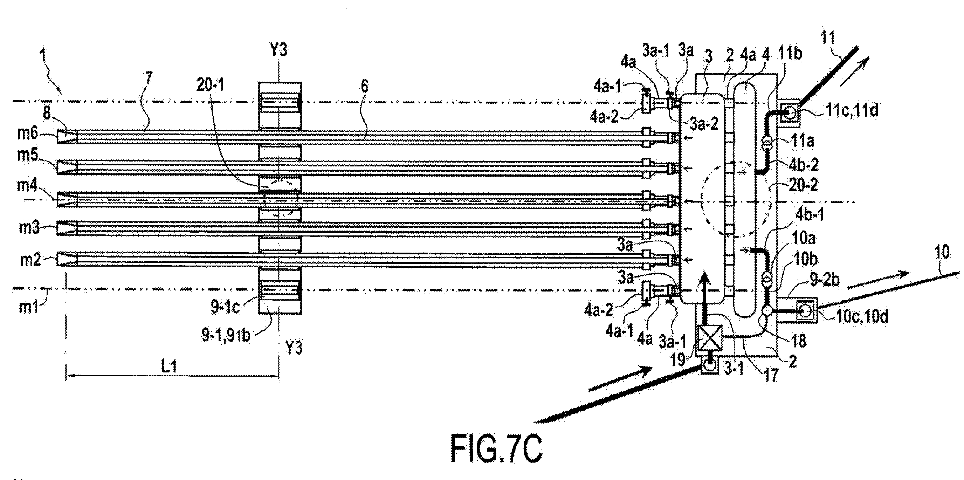

Sur les figures 2 et 7C, on a représenté deux emplacements supplémentaires inoccupés de modules de séparation m₁ et m₇. On comprend que les vannes d'obturation 3a-1 et 4a-1 à l'extrémité des deux premiers orifices d'entrée 3a et respectivement deux des deuxièmes orifices d'entrée 4a des emplacements des modules m₁ et m₇ inoccupés sont en position fermée, tandis que les vannes d'obturation pour les modules m₂ et m₆ sont en position ouverte.

Les vannes d'obturation 3a-1 et 4a-1 peuvent être de type conventionnel et opérées de manière mécanique par le bras robotisé d'un ROV, sous-marin automatique 40 piloté depuis la surface. Mais, elles sont avantageusement de type automatique, opérées depuis la surface par une liaison directe entre le FPSO et le dispositif séparateur sous-marin 1. Une telle liaison directe peut être assurée par un ombilical, non représenté, assurant la fourniture d'énergie électrique, ainsi que les signaux de commande des divers automatismes du séparateur sous-marin 1.

On isole un module 1a en fermant les vannes 3a-1 desdites premières conduites de sortie 3a et vannes 4a-1 desdites deuxième conduites d'entrée 4a du module m₂, m₆ correspondant, ce qui permet soit de démonter ledit module de séparation 1a pour le remonter en surface pour effectuer soit un contrôle ou une maintenance, soit pour la remplacer par un module présentant des caractéristiques de diamètre ou de longueur différentes. Dans le cas de changement de type de module, il conviendra bien sûr de changer l'ensemble des modules pour qu'ils soient tous identiques et présentent alors des performances de séparation identiques. Il convient de noter que les nouveaux modules 1a devront être équipés à leurs dites deuxièmes extrémités ou extrémités droites 6-2,7-2 de partie respectivement femelle-mâle, identiques à celles des modules 1a qu'ils remplacent, ces dernières correspondant aux extrémités respectivement mâle-femelle des connecteurs automatiques 3a-2 situés aux extrémités des premières conduites de sortie 3a et 4a-2 aux extrémités des deuxièmes conduites d'entrée 4a.

Ainsi, en fonction des variations des caractéristiques du pétrole brut en provenance du puits, et de manière à garantir un fonctionnement correct de la séparation, on isolera, donc on supprimera avantageusement un ou plusieurs modules de séparation 1a de manière à maintenir une vitesse du fluide à séparer optimale. En cas d'augmentation du débit du puits au cours du temps, par exemple en raison d'une plus grande arrivée d'eau (augmentation du « water-cut »), on installera avantageusement un ou plusieurs modules de séparation supplémentaires, par exemple deux modules de séparation supplémentaires sur les lignes m₁ et m₇ en réserve du dispositif séparateur 1 de la figure 2. Dans d'autres cas, tout au long de la durée de vie du puits qui peut s'étaler sur 20-25 ans, voire plus, on sera amené à substituer l'ensemble des modules de séparation 1a par des modules plus adaptés, en termes de diamètre et longueur L desdites conduites de séparation 7.

Pour assurer un fonctionnement correct, l'ensemble des modules de séparation 1a doit avoir une inclinaison identique. En général, ils doivent être en position horizontale. Mais, selon les caractéristiques physico-chimiques du pétrole, on peut être amené à incliner légèrement les modules de séparation dans le plan XoZ de quelques degrés, soit de manière positive, soit négative, par exemple d'un angle pouvant aller jusqu'à plus ou moins 6° par rapport à l'horizontale. A cet effet, on peut actionner avec le ROV 40 lesdits premiers vérins 13 au niveau de ladite première embase 9-1. La deuxième embase 9-2 est également équipée d'une pluralité de deuxièmes vérins 14 similaires aux premiers vérins 13, ces deuxièmes vérins 14 sont supportés par une plateforme supérieure 9₂b au sommet de la deuxième embase 9-2, lesdits deuxièmes vérins 14 supportant la plateforme inférieure 2a de ladite première structure support 2 et permettant ainsi d'ajuster la hauteur, l'horizontalité ou l'inclinaison dudit dispositif collecteur 1b et/ou des modules de séparation en combinaison avec l'ajustement des premiers vérins 13. Il est souhaitable de garantir au niveau des conduites de séparation 7 desdits premier et deuxième réservoirs 3,4 une horizontalité parfaite ou une légère inclinaison bien ajustée dans les plans XoZ ou YoZ. Une fois les réglages de niveau terminés au niveau desdits premiers vérins 13 et deuxième vérin 14, on peut installer des calages mécaniques 15 constitués par exemple de jeux de cales biaises complémentaires 15-1,15-2 mis en place et ajustés par le ROV 40, puis rétracter les vérins hydrauliques, en attendant une réactivation future pour un réajustement de l'horizontalité de l'ensemble ou une modification de l'angle de l'inclinaison.

Tous les modules de séparation 1a étant identiques, le débit global entrant au niveau de la première conduite d'entrée 3-1 est divisé par le nombre de modules de séparation. En d'autres termes, le débit dans chacun des 5 modules de séparation 1a est égal à 1/5 du débit entrant au niveau de la première conduite d'entrée 3-1. Tous les modules de séparation sont au niveau desdits premiers orifices de sortie 3a au même niveau de pression correspondant à la pression du premier réservoir 3, et au niveau du premier orifice d'entrée 4a, au même niveau de pression correspondant à la pression du deuxième réservoir collecteur 4. En cas de déséquilibre sur l'un des modules de séparation, par exemple une diminution du débit propre dudit module de séparation, le débit du fluide à l'intérieur des autres modules de séparation se verra sensiblement augmenté, ce qui augmentera la perte de charge au sein de la conduite de séparation et donc diminuera les débits propres desdits autres modules de séparation, rééquilibrant ainsi chacun des débits des différents modules de séparation. En revanche, en cas de dépôts de sable dans lesdites conduites d'amenée 6 et surtout conduite de séparation 7 d'un module de séparation, celui-ci n'aura plus alors les mêmes caractéristiques hydrodynamiques et l'ensemble des modules de séparation sera alors déséquilibré, car certains pourront éventuellement devenir inefficaces et voire même se boucher. Pour éviter ce phénomène de bouchage redouté, on effectue régulièrement une fermeture des vannes 3a-1 et 4a-1 de l'ensemble des modules de séparation, sauf les vannes d'un des modules de séparation que l'on veut nettoyer. En effet, lors des processus de séparation, la vitesse du fluide dans les modules de séparation n'empêche pas le dépôt des grosses particules de sable dans les conduites 6 et 7, car seules les particules de plus faible diamètre sont entraînées par l'huile et par l'eau.

En dirigeant l'intégralité de la production de fluide vers un seul module de séparation, on multiplie la vitesse du fluide dans ledit module de séparation sensiblement par 5, le sable déposé dans les conduites 6 et 7 dudit module est alors entraîné vers le réservoir collecteur 4. Lors de l'opération de nettoyage, le fluide continue à circuler, mais le dispositif séparateur 1 se trouve globalement hors fonctionnement. On a en effet, au préalable arrêté la réinjection d'eau dans le puits distant ou le rejet à la mer de l'eau traitée et l'on expédie vers la surface l'intégralité du fluide, c'est-à-dire le pétrole en cours de séparation au moment de l'arrêt, puis au bout de quelques instants, le pétrole brut chargé de sable résultant du nettoyage du module de séparation. Au bout de quelques minutes, le module de séparation étant nettoyé, on ferme les vannes correspondantes pour l'isoler et simultanément ouvrir les vannes 3a-1,4a-1 du module de séparation suivant. On procède ainsi de proche en proche et une fois l'ensemble des modules de séparation nettoyés, on réouvre toutes les vannes 3a-1 et 4a-1 pour remettre en route le processus de séparation.

Pendant toute cette période de nettoyage, ainsi que pendant la phase de redémarrage du processus de séparation, l'intégralité de la production est renvoyée en surface pour traitement à bord du FPSO.

Cette phase de redémarrage peut prendre 15 à 30 minutes, voire moins et l'ensemble du processus de nettoyage et de redémarrage peut être effectué en 30 à 45 mn selon la qualité du pétrole brut considéré et le nombre de modules de séparation. On effectuera avantageusement ce nettoyage de manière régulière, par exemple tous les mois, voire plus fréquemment, de manière à éviter que le sable ne s'accumule trop et ne vienne perturber le fonctionnement du séparateur 1. Le pétrole brut renvoyé en surface sera alors traité et la quantité de sable avantageusement mesurée de manière précise, pour déterminer de manière optimale la date de la prochaine opération de nettoyage.

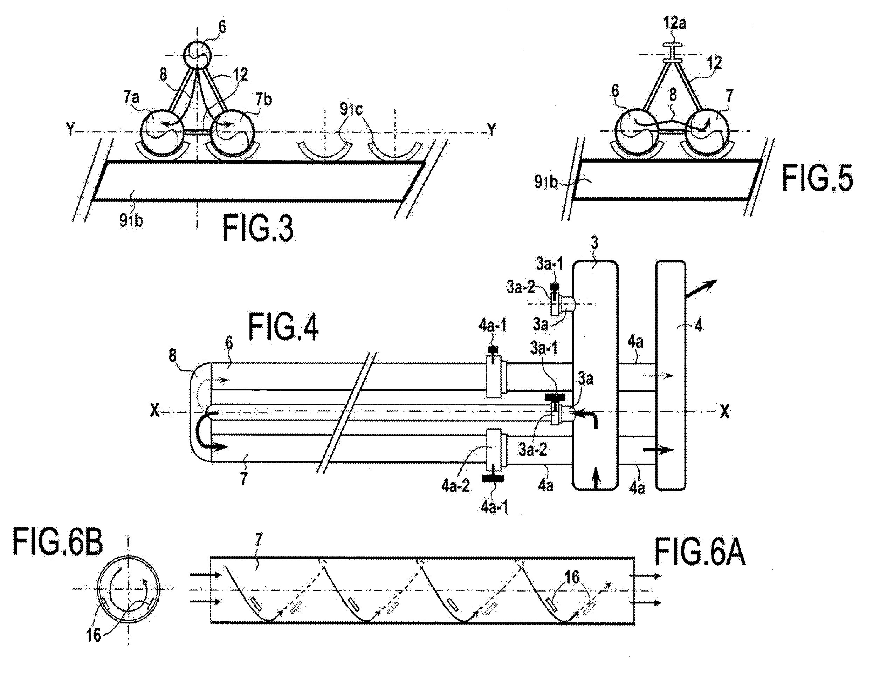

Dans le cas d'un module de séparation comportant deux conduites de séparation 7, tel que représenté sur la figure 3, la procédure de nettoyage est légèrement différente. Elle est détaillée ci-après en liaison avec la figure 4 représentant en plan ledit module de séparation double dénommé « module bi-tube », c'est-à-dire comportant deux conduites de séparation 7.

Toutes les vannes 3a-1, et, le cas échéant, les vannes 4a-1 des autres modules de séparation étant fermées, on ferme la vanne 4a-1 de l'une des conduites de séparation 7a ou 7b du module de séparation bi-tube à nettoyer. Tout le pétrole brut passe alors dans la conduite d'amené 6 et dans la seconde conduite de séparation 7b ou respectivement 7a et la vitesse du fluide emporte les dépôts de sable, puis au bout de quelques minutes, on ouvre la vanne 4a-1 de la conduite de séparation 7a ou 7b initialement fermée et on ferme l'autre vanne 4a-1 de l'autre conduite de séparation 7b ou respectivement 7a, ce qui a pour effet de diriger l'intégralité du fluide à grande vitesse vers l'autre conduite de séparation du même module bi-tube. Au bout de quelques minutes, on ferme la vanne 3a-1 du module de séparation ainsi nettoyé, puis on procède de proche en proche avec chacun des modules de séparation.

Dans une version préférée de l'invention décrite en liaison avec la figure 5, la conduite d'amenée 6 a le même diamètre que la conduite de séparation 7 et elles sont disposées parallèlement dans un même plan horizontal XoY. De ce fait, dès que le pétrole brut sort de la première conduite de sortie 3a reliée au premier réservoir 3, la séparation peut commencer et elle s'effectue alors sur une distance double, à savoir une première distance L correspondant à la longueur de la conduite d'amenée 6 à l'aller, puis au retour, de nouveau sur une deuxième distance L correspondant à la longueur de la conduite de séparation 7. En procédant ainsi, on réduit avantageusement la longueur L du module, ce qui présente un intérêt dans le cas où les modules de séparation requis compte-tenu de la qualité du pétrole ou de la quantité du pétrole à traiter nécessiterait une très grande longueur, par exemple 60 à 70m de longueur. On peut ainsi, diminuer par deux la longueur des modules de séparation.

Dans cette configuration, il est impératif que les deux conduites 6 et 7 soient dans le même plan horizontal, car si elles étaient superposées, lors du passage du fluide de la conduite supérieure 6 à la conduite inférieure 7, une partie de l'eau se trouvant déjà séparée en partie basse de la conduite supérieure 6, tomberait naturellement par gravité dans la conduite inférieure 7 et donc se remélangerait. Inversement, la partie huileuse du pétrole plus légère s'accumulerait dans la conduite supérieure 6, mais finirait quand même à atteindre la conduite inférieure 7 au bout de quelques temps ; il en résulterait un re-mélangeage là encore plus ou moins aléatoire de l'huile et de l'eau, ce qui irait à l'encontre du but recherché.

Dans le mode de réalisation de type module bi-tube de la figure 3, on disposera avantageusement une structure de renfort 12 apte à maintenir le positionnement de type triangulaire de la conduite supérieure 6 par rapport aux deux conduites inférieures 7. De même, dans le cas d'un module de séparation mono-tube à double parcours tel que représenté sur la figure 5, on disposera également une structure de renfort triangulaire 12 entre une poutre supérieure en H 12a, faisant alors avantageusement office de membrure supérieure du module par rapport aux deux conduites inférieures 7 dans le cas d'un module de séparation mono-tube à double parcours tel que représenté sur la figure 5, donnant ainsi à l'ensemble une grande rigide.

Dans les versions décrites en référence aux figures 1 à 3, les conduites d'amenée 6 ont un diamètre plus faible que les conduites de séparation 7,7a-7b, de manière à ce que le pétrole brut circule plus vite et que la séparation n'ait pas le temps de devenir significative dans la conduite d'amenée 6, pour éviter un re-mélangeage lors du passage dans la conduite de séparation 7, notamment au niveau des dispositifs de transition coudés 8. Ce re-mélangeage, comme mentionné ci-dessus pourrait déstabiliser le processus de séparation eau-huile. Ainsi, le diamètre intérieur de la conduite d'amenée 6 sera compris entre 30 et 100%, de préférence entre 50 et 100% du diamètre intérieur de la conduite de séparation 7, 7a-7b.

Lors des opérations de nettoyage des modules de séparation 1a, la vitesse du fluide dans la conduite d'amenée 6 sera supérieure à celle dans la conduite de séparation 7,7a-7b. Mais, dans tous les cas la vitesse dans la conduite de séparation 7,7a-7b sera supérieure à la vitesse permettant de remettre en suspension les particules de sable.

Pour améliorer l'efficacité du nettoyage des modules de séparation, on disposera avantageusement dans les conduites de séparation 7 des chicanes 16 représentées sur la figure 6A représentant ladite conduite de séparation 7 en coupe longitudinale et sur la figure 6B en coupe transversale YoZ. Ces chicanes sont destinées à créer des turbulences tourbillonnaires principalement dans la partie basse de la conduite de séparation et sont avantageusement disposées dans le tiers inférieur de la hauteur de ladite conduite. Ces chicanes se trouvent ainsi principalement dans la partie en eau de la conduite et sont dimensionnées de manière à créer un minimum de pertes de charge, donc de turbulences en fonctionnement normal, et à créer un mouvement tourbillonnaire intense dès que l'on augmente la vitesse du fluide comme expliqué précédemment. Ces chicanes sont de préférence solidarisées à la conduite par soudage depuis l'intérieur de la conduite lors de la fabrication des modules.

Les pompes 10a,11a intégrées à la structure porteuse 2 sont avantageusement disposées dans des modules extractibles par simple levage depuis la surface. A cet effet, les pompes seront équipées de connecteurs automatiques à l'entrée ainsi qu'à la sortie et de connexions électriques sous-marines connues de l'homme de l'art, de manière à pouvoir être déconnectées et ramenées en surface pour effectuer les maintenances nécessaires avant d'être réinstallées ou plus simplement remplacées. Les pompes peuvent également être commandées et alimentées depuis la surface par l'intermédiaire d'ombilicaux non représentés.

Les conduites 6 et 7 des modules de séparation 1a sont avantageusement réalisées en matériau insensible à la corrosion, de préférence en acier inox ou en acier duplex, de manière à ce que la surface interne desdites conduites ne se modifie pas dans le temps et que leurs performances hydrodynamiques restent identiques notamment entre tous les modules de séparation et sensiblement constantes pendant toute la durée de l'exploitation.

A titre d'exemple, un séparateur sous-marin 1 selon l'invention destiné à équiper un champ pétrolier en fin de vie, c'est à dire une série de puits produisant surtout de l'eau et peu de pétrole ne renverra en surface que le reliquat huileux du pétrole. Ainsi, pour traiter 25.000 barils par jour de pétrole brut soit environ 4000m³ par jour, ou encore 167m³/h, et présentant une proportion d'eau (« water-cut ») de 75%, on mettra en oeuvre un dispositif de séparation 1 équipé de 3 modules de séparation 1a, comportant chacun une conduite d'amenée supérieure 6 de diamètre extérieur de 200mm et d'épaisseur 8.55mm, d'une conduite de séparation 7 inférieure de diamètre extérieur de 300mm et d'épaisseur 12.8mm, d'un premier réservoir 3 tubulaire circulaire à fonds bombés de longueur de 5m, de diamètre extérieur de 0.75m et d'épaisseur 32.1mm, et d'un second réservoir 4 tubulaire à section circulaire à fonds bombés de longueur 5m, de diamètre extérieur 1m et d'épaisseur 42.8mm. Les conduites 6 et 7 de longueur 50 m seront avantageusement équipées d'un système d'isolation thermique de conduite de 100mm d'épaisseur constitué d'un gel isolant contenu dans une enveloppe déformable, tel que décrit dans les demandes de brevets antérieures de la demanderesse, chacun des modules de séparation pesant environ 25 tonnes dans l'air et environ 20 tonnes dans l'eau.

Le dispositif collecteur 1b comprenant le premier réservoir 3, le deuxième réservoir 4, la structure support 2, ainsi que les vannes automatisées 3a-1,4a-1, les pompes 10a,11a et l'ensemble des connecteurs automatiques pèse environ 25 tonnes dans l'air et 20 tonnes dans l'eau.

L'ancre a succion en acier 20-2, de forme cylindrique creuse, mesure 6m de diamètre, 35m de longueur et a une épaisseur de 15mm, ce qui représente un poids d'environ 75 tonnes dans l'eau, y compris la deuxième embase 9-2 et les deuxièmes vérins 14. L'ancre à succion 20-1 de même forme cylindrique creuse en acier, mesure 2.5m de diamètre, 20m de longueur et a une épaisseur de 10mm, ce qui représente un poids d'environ 15 tonnes dans l'eau y compris la première embase 9-1 et les premiers vérins 13. En procédant avec un tel séparateur sous-marin 1, on laisse ainsi 75% de la production (soit 3000m³ d'eau par jour) au fond de la mer et l'on ne remonte à bord du FPSO que les 25% représentant l'intégralité de la valeur marchande du pétrole brut produit, soit environ 1000m³ d'huile par jour.

Tous les modules de séparation 1a ont des pressions de référence communes au point d'alimentation 6-2 (pression d'entrée) et au point de collecte 7-2 (pression de sortie). Ceci signifie que la perte de charge à travers tous les séparateurs est identique. Ainsi, à composition identique, sauf si l'une des conduites 7 présente un diamètre plus faible (dépôt de solide par exemple) le débit est égal dans tous les modules de séparation. La seule façon de déstabiliser les débits est de générer une différence de composition entre les modules de séparation. En effet en imposant une même perte de charge il résulte deux couples de débits/compositions possibles, un premier couple avec les débits et compositions identiques (cas de référence 23), un autre couple avec une conduite 7 alimenté par un faible débit 24-24a de liquide plus visqueux que la composition de référence et l'autre un fort débit 25-25a de liquide moins visqueux que la composition de référence.

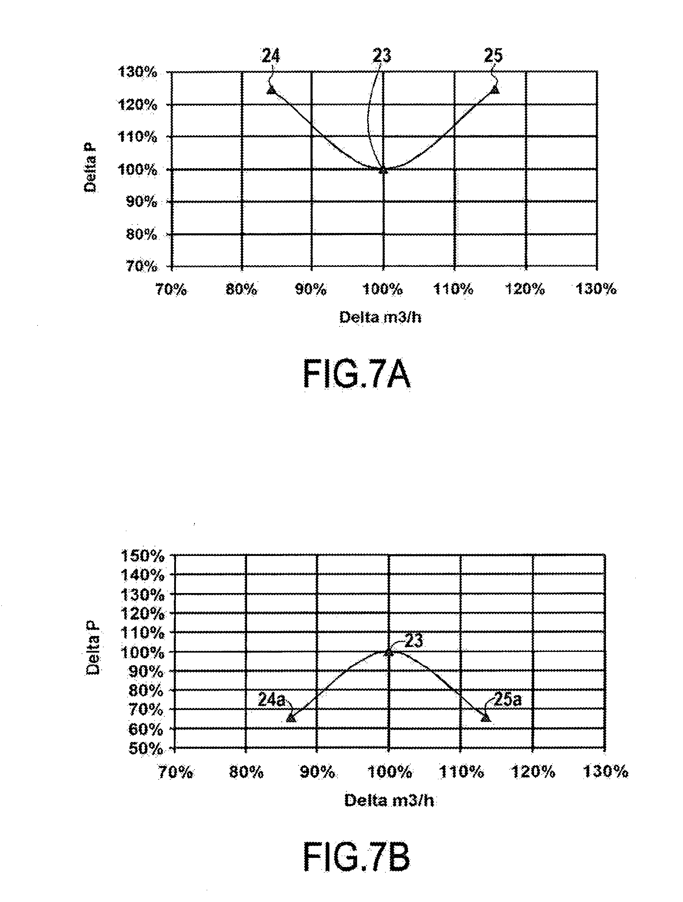

Sur le diagramme de la figure 7A, on a représenté la variation de perte de charge dans le cas d'un brut présentant un « water-cut » éloigné du point d'inversion. Il apparaît que le système est facile à stabiliser et difficile à déstabiliser. En effet, le point de référence 23 correspond à un minimum de perte de charge, une diminution 24 ou un accroissement 25 du couple débit/viscosité conduit à une augmentation des pertes de charges, le système a donc tendance à revenir naturellement vers le point de référence 23. Ainsi, loin du point d'inversion, les variations de composition engendrent de faibles variations de la viscosité (positives 25 ou négatives 24) qui augmentent la perte de charge globale du système et ont tendance à ramener le débit vers son état d'équilibre 23. Le système est naturellement stable.

Le diagramme de la figure 7B correspond à celui d'un brut présentant un « water-cut » correspondant au point d'inversion : il apparaît cette fois que le système est peu stable. En effet, le point de référence 23 correspond alors à un maximum de perte de charge, une diminution 24a ou un accroissement 25a du couple débit/viscosité conduit à une diminution des pertes de charges, le système a donc tendance à se stabiliser vers son nouvel état d'équilibre (24a, 25a) qui présente une dissymétrie de débit/composition. Ainsi, au point d'inversion, de faibles variations de compositions engendrent des variations drastiques de la viscosité en plaçant les points 24a et 25a de part et d'autre de l'inversion soit avec des viscosités très inférieures au point de référence 23. Cette baisse significative de la viscosité diminue la perte de charge globale tendant à laisser le système dans son état déséquilibré (24a, 25a). Le système est alors naturellement instable.

Pour éviter de se trouver dans la zone du point d'inversion, on effectue avantageusement un recyclage de l'huile obtenue à la sortie du réservoir collecteur 4, comme représenté sur la figure 7C. A cet effet, on dispose sur la portion de conduite 10b une vanne trois voies 18 ajustable depuis la surface, qui prélève une partie de l'huile produite, par exemple 30%, et la réinjecte au moyen d'une conduite de dérivation 17 dans un mélangeur 19 situé sur la conduite d'alimentation en pétrole brut 5. L'huile ainsi réinjectée et mélangée au brut aura pour effet de modifier le « water-cut » du brut entrant, et ainsi de s'éloigner du point d'inversion redouté. Selon les cas, on pourra être amené à recycler, non pas l'huile comme décrit précédemment, mais l'eau, dans des proportions appropriées, qui peuvent être similaires ou légèrement différentes. L'eau sera prélevée sur la portion de conduite 11b pour être réinjectée de la même manière sur la conduite d'alimentation en pétrole brut.

Pour connaître en temps réel le « water-cut » du pétrole brut, on mesurera avantageusement, par exemple au niveau de chacune des pompes 10a-11a, les débits propres en huile traitée 10-1 et en eau traitée 11-1, par des moyens connus de l'homme de l'art, l'information étant alors par exemple retransmise en surface de manière à ce que l'opérateur puisse déclencher le recyclage d'un pourcentage approprié d'eau ou d'huile, de manière à s'éloigner du point d'inversion redouté.

Pour la dépose au fond de la mer du dispositif de séparation 1, on réalise les étapes successives suivantes dans lesquelles :
1.1) on descend depuis la surface un dit dispositif collecteur commun 1b équipé de dits premier, troisième, quatrième et cinquième éléments de raccordement 3a-2,4a-2,10c,11c à l'extrémité desdites portion de conduite dudit premier orifice de sortie 3a, deuxième portion de conduite dudit deuxième orifice d'entrée 4a et première portion de conduite 11b supportés par ledit premier élément de structure support 2a, et
1.2) on raccorde lesdits quatrième et cinquième éléments de raccordement à des quatrième et cinquième éléments de raccordement complémentaires 6,10d,11d aux extrémités desdites conduites sous-marines d'alimentation reposant au fond de la mer et dite première et deuxième conduites d'évacuation maintenues en position supportées au niveau de ladite deuxième embase ancrée au fond de la mer, et
2.1) on descend depuis la surface un dit module de séparation 1a équipé desdits deuxième et troisième éléments de raccordement complémentaires auxdites deuxièmes extrémités de la conduite d'amenée et respectivement conduite de séparation 6-2 et 7-2 que l'on dépose sur ladite première embase 9-1 ancrée au fond de la mer, et
2.2) on réalise le raccordement desdits deuxième et troisième éléments de raccordement complémentaires 6-3,7-3 du module de séparation 1a avec desdits deuxième et troisième éléments de raccordement aux extrémités desdits premiers orifices de sortie 3a et dits deuxièmes orifices d'entrée 4a.

Le positionnement dudit dispositif collecteur commun et dudit module de séparation au regard de ladite deuxième embase et respectivement première embase ainsi que leurs raccordements respectifs sont opérés par le bras robotisé d'un ROV sous-marin automatique piloté depuis la surface.

Dans la description de l'invention, on a décrit une conduite d'amenée 6 située au-dessus ou au même niveau que la conduite de séparation 7, mais cette conduite d'amenée 6 peut aussi être située en dessous de la conduite de séparation 7 : le processus de séparation restant identique.

## Revendications

1. Dispositif modulaire de séparation gravitaire liquide/liquide (1) de deux phases liquides de densités différentes d'un fluide liquide, de préférence encore les phases aqueuse (11-1) et phase huileuse (10-1) d'un pétrole brut, de préférence partiellement ou totalement dégazé, ledit dispositif modulaire de séparation reposant au fond de la mer (30), de préférence à grande profondeur d'au moins 1000 m, **caractérisé en ce qu'**il comprend :
a) au moins un module de séparation (1a), de préférence une pluralité de n modules de séparation, n étant de préférence un entier de 5 à 10, chaque dit module de séparation (1a) étant supporté par au moins une première embase (9-1) reposant au fond de la mer, ladite première embase (9-1) étant ancrée au fond de la mer par fixation sur une ancre, de préférence fixation sur une première pile (20-1) du type « ancre à succion », enfoncée au fond de la mer, chaque module de séparation comprenant :
a.1) une conduite d'amenée de fluide (6), s'étendant dans une direction longitudinale axiale (X₁X₁), et
a.2) au moins une conduite de séparation gravitaire s'étendant rectilignement dans une direction longitudinale axiale (X₂X₂), disposée telle que :
- une première extrémité (6-1) de ladite conduite d'amenée (6) est reliée à au moins une première extrémité (7-1) d'au moins une conduite de séparation (7,7a-7b) et,
- la deuxième extrémité (6-2) de ladite conduite d'amenée (6) est reliée à un premier orifice de sortie (3a) d'un premier réservoir cylindrique collecteur (3) s'étendant de préférence dans une direction longitudinale axiale (Y₁Y₁) perpendiculaire à la direction longitudinale axiale (X₁X₁) de ladite conduite d'amenée, la deuxième extrémité (7-2) de chaque conduite de séparation (7,7a-7b) étant reliée à un deuxième orifice d'entrée (4a) d'un deuxième réservoir cylindrique collecteur (4), et
a.3) un dispositif tubulaire coudé (8) apte à permettre le transfert dudit fluide entre ladite première extrémité (6-1) de ladite conduite d'amenée (6) et chaque dite première extrémité (7-1) de chaque dite conduite de séparation (7) dudit module de séparation (1a), et
b) un dispositif collecteur commun (1b) supporté par une deuxième embase (9-2) reposant au fond de la mer (30), ladite deuxième embase (9-2) est ancrée au fond de la mer par fixation sur une ancre, de préférence une fixation sur une deuxième pile (20-2) de type « ancre à succion » enfoncée au fond de la mer, ledit dispositif collecteur commun (1b) comprenant une première structure de support (2,2a) supportée par ladite deuxième embase et supportant :
b.1) ledit premier réservoir cylindrique (3) comportant :
- au moins un premier orifice d'entrée (3-1), de préférence situé en partie basse dudit premier réservoir, ledit premier orifice d'entrée (3-1) étant relié ou destiné à être relié à une conduite sous-marine d'alimentation reposant au fond de la mer (5) alimentant ou destinée à alimenter ledit premier réservoir en dit fluide, et
- une pluralité de dits premiers orifices de sortie (3a), chaque dit premier orifice de sortie (3a) comprenant ou coopérant avec une première vanne d'obturation (3a-1), au moins certain(s) de(s) dit(s) premier(s) orifice(s) de sortie (3a) étant reliés chacun à une dite deuxième extrémité (6-2) d'une dite conduite d'amenée (6), lesdits premiers orifices de sortie (3a) étant disposés côte à côte dans la direction axiale longitudinale (Y₁Y₁) dudit premier réservoir (3), et
b.2) un dit deuxième réservoir (4) comportant :
- une pluralité de deuxièmes orifices d'entrée (4a), chaque dit deuxième orifice d'entrée (4a) comprenant ou coopérant avec une deuxième vanne d'obturation (4a-1), au moins certain(s) de(s) dit(s) deuxième(s) orifice(s) d'entrée (4a) étant relié(s) chacun à une dite deuxième extrémité (7-2) d'une conduite de séparation (7), lesdits deuxièmes orifices d'entrée (4a) étant disposés côte à côte dans la direction longitudinale axiale (Y₂Y₂) dudit deuxième réservoir (4), et
- au moins un deuxième orifice de sortie supérieur (4b-1) coopérant avec une première pompe d'export (10a) reliée ou destinée à être reliée à une première conduite d'évacuation (10), et
- au moins un deuxième orifice de sortie inférieur (4b-2), comprenant ou coopérant avec une deuxième pompe d'export (11a) reliée ou destinée à être reliée à une deuxième conduite d'évacuation (11).

2. Dispositif modulaire de séparation gravitaire liquide/liquide selon la revendication 1, **caractérisé en ce que** :
- chaque dite conduite de séparation gravitaire s'étend rectilignement dans une direction longitudinale (X₂X₂) située dans un même plan que la direction longitudinale (X₁X₁) de ladite conduite d'amenée, de préférence parallèlement à ladite conduite d'amenée (6), et
- ledit deuxième réservoir cylindrique collecteur (4) est disposé dans une direction longitudinale axiale (Y₂Y₂) parallèle à ladite direction longitudinale axiale (Y₁Y₁) dudit premier réservoir, et
- les directions longitudinales (X₁X₁) de l'ensemble desdites conduites d'amenée sont disposées parallèlement entre elles, et
- les directions longitudinales (X₂X₂) de l'ensemble desdites conduites de séparation (7) sont disposées parallèlement entre elles,

3. Dispositif modulaire de séparation gravitaire liquide/liquide (1) selon la revendication 1 ou 2, **caractérisé en ce que** ledit dispositif collecteur commun (1a) comprend :
i) un dit premier réservoir (3) dans lequel :
- ledit premier orifice d'entrée (3-1) comprend une première portion de conduite d'entrée dont l'extrémité, maintenue en position fixe par rapport à ladite première structure support (2,2a), comporte un premier élément de raccordement (5a) raccordé ou destiné à être accordé à un premier élément de raccordement complémentaire (5b) à l'extrémité de ladite conduite sous-marine d'alimentation (5), de préférence ladite première portion de conduite d'entrée (3-1) étant une portion première portion de conduite rigide dont ledit premier élément de raccordement (5a) est maintenu en position fixe en sous-face de ladite première structure de support (2,2a), et
- chaque dit premier orifice de sortie (3a) comprend une première portion de conduite de sortie rigide, dont l'extrémité, maintenue en position fixe par rapport à ladite première structure support (2,2a), comprend un deuxième élément de raccordement (3a-2) raccordé ou destiné à être raccordé à un deuxième élément de raccordement complémentaire (6-3) à une dite deuxième extrémité (6-2) de conduite d'amenée (6), et
ii) un dit deuxième réservoir (4) dans lequel :
- chaque dit deuxième orifice d'entrée (4a) comprend une deuxième portion de conduite rigide dont l'extrémité, maintenue en position fixe par rapport à ladite première structure support (2,2a) comporte un troisième élément de raccordement (4a-2), raccordé ou destiné à être raccordé à un troisième élément de raccordement complémentaire (7-3) à une dite deuxième extrémité (7-2) de conduite de séparation (7), et
- chaque dit deuxième orifice de sortie supérieur (4b-1) est relié à une dite première pompe (10a) supportée par ladite première structure de support (2,2a), ladite première pompe (10a) étant reliée par un quatrième élément de raccordement (10c) à une dite première conduite d'évacuation (10), de préférence par l'intermédiaire d'une première portion de conduite d'évacuation (10b) dont l'extrémité comporte un dit quatrième élément de raccordement (10c), ledit quatrième élément de raccordement (10c) étant maintenu en position fixe par rapport à ladite première structure support (2,2a), de préférence encore en sous-face de ladite première structure support (2,2a), ledit quatrième élément de raccordement (10c) étant raccordé ou destiné à être raccordé à un quatrième élément de raccordement complémentaire (10d) à l'extrémité de ladite première conduite d'évacuation (10), et
- chaque dit deuxième orifice de sortie inférieur (4b-2) est relié à une deuxième pompe (11a) supportée par ladite première structure de support (2,2a), ladite deuxième pompe (11a) étant reliée par un cinquième élément de raccordement à une dite deuxième conduite d'évacuation (11), de préférence par l'intermédiaire d'une deuxième portion de conduite d'évacuation (11b), dont l'extrémité comporte un dit cinquième élément de raccordement (11d), ledit cinquième élément de raccordement (11d) étant maintenu en position fixe par rapport à ladite première structure support (2,2a), de préférence encore en sous-face de ladite première structure support (2,2a), ledit cinquième élément de raccordement (11d) étant raccordé ou destiné à être raccordé à un cinquième élément de raccordement complémentaire (11d) de l'extrémité d'une dite deuxième conduite d'évacuation (11), et
- lesdits premier, quatrième et cinquième éléments de raccordement complémentaires (5b, 10d, 11d) situés aux extrémités des dite conduite sous-marine d'alimentation reposant au fond de la mer (5) et respectivement dites première et deuxième conduites d'évacuation (10,11), sont supportés par ladite deuxième embase (9-2) et maintenus en position fixe en surface d'une première plateforme (9₂b) de ladite deuxième embase (9-2).

4. Dispositif modulaire de séparation gravitaire liquide/liquide (1) selon l'une des revendications 1 à 3, **caractérisé en ce que** ladite conduite d'amenée (6) présente un diamètre inférieur à celui de la conduite de séparation et est disposée au-dessus de la conduite de séparation.

5. Dispositif modulaire de séparation gravitaire liquide/liquide (1), selon l'une des revendications 1 à 4, **caractérisé en ce que** ledit module de séparation (1a) comporte une conduite d'amenée supérieure (6) disposée au-dessus d'au moins deux conduites de séparation inférieures (7a,7b).

6. Dispositif modulaire de séparation gravitaire liquide/liquide (1) selon l'une des revendications 1 à 5, **caractérisé en ce qu'**un dit module de séparation comporte une dite conduite d'amenée (6) et dite conduite de séparation (7) disposées côte à côte à une même profondeur et de même diamètre.

7. Dispositif modulaire de séparation liquide/liquide selon l'une des revendications 1 à 6, **caractérisé en ce que** tous lesdits modules de séparation (1a,mᵢ) sont supportés par une même et unique dite première embase (9-1), ladite première embase (9-1) s'étendant dans une direction longitudinale (Y₃Y₃) perpendiculaire aux directions longitudinales (XX',X₁X₁,X₂X₂) desdits modules de séparation (1a) et ladite première embase (9-1) étant située dans la direction longitudinale (XX') desdits modules de séparation à une distance L1 desdites premières extrémités (6-1,7-1) desdits modules de séparation (1a) égale à une valeur de 1/3 à 1/2 de la longueur totale L desdits modules de séparation (1a) à partir desdites premières extrémités (6-1,7-1) desdits modules de séparation.

8. Dispositif modulaire de séparation liquide/liquide selon l'une des revendications 1 à 7, **caractérisé en ce que** ledit module de séparation (1a) comporte des éléments mécaniques de renfort (12) assurant une liaison rigide entre ladite conduite d'amenée (6) et la ou lesdites conduites de séparation (7), de préférence sur toute leur longueur.

9. Dispositif modulaire de séparation liquide/liquide selon l'une des revendications 1 à 8, **caractérisé en ce qu'**il comporte une conduite de dérivation à partir dudit deuxième orifice de sortie supérieur (4b-1) ou de ladite première conduite d'évacuation (10) et/ou une conduite de dérivation (17) à partir dudit deuxième orifice de sortie inférieur (4b-2) ou de ladite deuxième conduite d'évacuation (11), de préférence à l'aide d'une vanne trois voies (18), de façon à transférer dans une dite conduite sous-marine d'alimentation reposant au fond de la mer (5) alimentant ledit premier réservoir, une fraction du liquide sortant dudit deuxième orifice de sortie supérieur (4b-1) ou respectivement dit deuxième orifice de sortie inférieur (4b-2), de préférence encore en transférant ladite fraction de liquide dans un mélangeur (19) situé au niveau de ladite conduite sous-marine d'alimentation reposant au fond de la mer (5).

10. Dispositif selon l'une des revendications 1 à 9, **caractérisé en ce que** ladite première embase (9-1) coopère avec des premiers vérins (13) aptes à régler l'horizontalité ou l'inclinaison desdits modules de séparation (1a) par rapport à l'horizontale et/ou et ladite deuxième embase (9-2) coopère avec des deuxièmes vérins (14) aptes à régler l'horizontalité ou l'inclinaison desdits modules de séparation et/ou l'horizontalité ou l'inclinaison desdits premier et deuxième réservoirs (3,4) par rapport à l'horizontale.

11. Procédé d'utilisation d'un dispositif modulaire de séparation gravitaire liquide/liquide selon l'une des revendications 1 à 10, **caractérisé en ce que** l'on réalise la séparation des phase huileuse (10-1) et phase aqueuse (11-1) d'un pétrole brut, de préférence partiellement ou totalement dégazéifié pouvant contenir du sable, selon les étapes successives suivantes dans lesquelles :
1) on alimente ledit premier réservoir (3) à partir d'au moins une dite conduite sous-marine d'alimentation (5) reposant au fond de la mer, en pétrole brut de préférence partiellement ou totalement dégazéifié dans un dispositif de séparation liquide/gaz et provenant d'un puits au fond de la mer, ladite conduite reposant au fond de la mer (5) étant reliée à un dit premier orifice d'entrée (3-1) dudit premier réservoir (3), et
2) on fait circuler ledit pétrole brut depuis ledit premier réservoir (3) vers ladite conduite d'amenée (6), et
3) on réalise la séparation d'une phase d'huile supérieure et d'une phase aqueuse inférieure pouvant contenir du sable, par circulation dudit pétrole brut au sein de chaque dite conduite de séparation (7), et
4) on évacue le fluide biphasique sortant de chaque dite conduite de séparation vers un dit deuxième orifice d'entrée (4a) dudit deuxième réservoir (4) et,
5) on évacue ladite phase huileuse depuis au moins un dit deuxième orifice de sortie supérieur (4b-1) par l'intermédiaire d'au moins une dite première conduite d'évacuation (10), de préférence jusque vers un support flottant en surface, à l'aide d'une dite première pompe (10a), et
6) on évacue ladite phase aqueuse depuis au moins un dit deuxième orifice de sortie inférieur (4b-2) par l'intermédiaire d'au moins une deuxième conduite d'évacuation (11), à l'aide d'une dite deuxième pompe (11a), de préférence vers un puits au fond de la mer dans lequel l'eau de ladite phase aqueuse est réinjectée.

12. Procédé d'utilisation selon la revendication 11, dans lequel on met en oeuvre un dispositif modulaire de séparation liquide/liquide dont au moins un dit premier orifice de sortie (3a) et un dit deuxième orifice d'entrée (4a) aptes à être raccordés à un même module de séparation, sont fermés et non raccordés à un dit module de séparation (1a), **caractérisé en ce qu'**après mise en oeuvre des étapes 1) à 6), on réalise les étapes successives suivantes dans lesquelles :
7.1) on ajoute un dit module de séparation (1a) que l'on descend depuis la surface et dont on raccorde lesdites deuxièmes extrémités (6-2,7-2) desdites conduite d'amenée (6) et respectivement conduite de séparation (7) au dit premier orifice de sortie (3a) et respectivement dit deuxième orifice d'entrée (4a) inoccupés, puis
8.1) on ouvre lesdites vannes d'obturation (3a-1 et 4a-1) desdits premier orifice de sortie (3a) et dit deuxième orifice d'entrée (4a).

13. Procédé d'utilisation selon la revendication 11, dans lequel on met en oeuvre un dispositif modulaire de séparation liquide/liquide (1) comportant plus de deux modules de séparation (1a), **caractérisé en ce qu'**après mise en oeuvre des étapes 1) à 6), on réalise les étapes successives suivantes dans lesquelles :
7.2) on referme lesdites vannes d'obturation (3a-1,4a-1) d'un dit premier orifice de sortie (3a) et d'au moins un dit deuxième orifice d'entrée (4a) raccordé à un même module de séparation (1a), et
8.2) on désolidarise ledit module de séparation raccordé au dit premier orifice de sortie et dit deuxième orifice d'entrée dont les vannes sont fermées, puis on remonte en surface ledit module de séparation désolidarisé.

14. Procédé d'utilisation selon la revendication 11, **caractérisé en ce qu'**aux étapes 5) et/ou 6) on prélève une fraction du liquide évacué à partir dudit deuxième orifice de sortie supérieur (4b-1) et/ou respectivement dudit deuxième orifice de sortie inférieur (4b-2), que l'on réinjecte sur ladite conduite sous-marine d'alimentation (5) pour mélanger ladite fraction de liquide avec le pétrole brut d'alimentation et ainsi modifier la proportion d'eau du pétrole brut entrant dans ledit dispositif modulaire de séparation (1).

15. Procédé d'utilisation selon la revendication 11, **caractérisé en ce qu'**après mise en oeuvre d'une séparation selon les étapes 1) à 6), on réalise le nettoyage d'au moins un module de séparation (1a) pour évacuer le sable éventuellement déposé au fond de sa dite conduite de séparation en réalisant les étapes successives suivantes dans lesquelles :
7.3) on ouvre lesdites vannes d'obturation (3a-1,4a-1) desdits premiers orifices de sortie (3a) et/ou dits deuxièmes orifices d'entrée (4a) du ou des modules de séparation (1a) à nettoyer et on ferme les vannes d'obturation desdits premiers orifices de sorties (3a) et/ou desdits deuxièmes orifices d'entrée (4a) auxquels sont raccordés les autres modules de séparation (1a) en plus grand nombre que les modules de séparation à nettoyer, de préférence un seul module de séparation (1a) étant à nettoyer et maintenu en communication ouverte avec lesdits premiers orifices de sortie et dits deuxièmes orifices d'entrée, et
8.3) on fait circuler à un débit accéléré ledit pétrole brut au sein du ou desdits modules de séparation à nettoyer exclusivement, et
9.3) on expédie vers la surface par l'intermédiaire dudit deuxième orifice de sortie supérieur (4b-1) l'intégralité du fluide sortant dudit deuxième réservoir (4), ladite deuxième pompe (11a) coopérant avec ledit deuxième orifice de sortie inférieur (4b-2) n'étant pas activée.

16. Procédé d'installation au fond de la mer d'un dispositif modulaire de séparation gravitaire liquide/liquide selon l'une des revendications 1 à 10, **caractérisé en ce que** l'on réalise les étapes suivantes dans lesquelles :
1) on descend depuis la surface un dit dispositif collecteur commun (1b) que l'on dépose sur une dit deuxième embase (9-2) ancrée au fond de la mer et on raccorde lesdits premier orifice d'entrée (3-1) et dits deuxième orifices de sortie supérieur (4b-1) et inférieur (4b-2) à desdites première et deuxième conduites d'évacuation (10,11), et
2) on descend depuis la surface au moins un dit module de séparation (1a) que l'on dépose sur une première embase (9-1) ancrée au fond de la mer et on raccorde lesdites deuxièmes extrémités (6-2,7-2) desdites conduite d'amenée et conduite de séparation avec lesdits premiers orifices de sortie (3a) et respectivement dits deuxièmes orifices d'entrée (4a) dudit dispositif collecteur commun (1b).

## Patentansprüche

1. Modulare Vorrichtung zur Flüssig-Flüssig-Schwerkrafttrennung (1) von zwei flüssigen Phasen unterschiedlicher Dichten eines flüssigen Fluids, weiterhin vorzugsweise der wässrigen Phase (11-1) und der Ölphase (10-1) eines vorzugsweise teilweise oder vollständig entgasten Rohöls, wobei die modulare Trennvorrichtung auf dem Meeresgrund (30) aufliegt, vorzugsweise in großer Tiefe von wenigstens 1000 m, **dadurch gekennzeichnet, dass** sie umfasst:
a) wenigstens ein Trennmodul (1a), vorzugsweise eine Vielzahl von n Trennmodulen, wobei n vorzugsweise eine ganze Zahl von 5 bis 10 ist, wobei jedes Trennmodul (1a) durch wenigstens einen auf dem Meeresgrund ruhenden ersten Sockel (9-1) getragen ist, wobei der erste Sockel (9-1) am Meeresgrund durch Befestigung an einem Anker, vorzugsweise Befestigung an einem ersten Pfeiler (20-1) vom Typ "Sauganker", der am Meeresgrund eingetrieben ist, verankert ist, wobei jedes Trennmodul umfasst:
a.1) eine Fluidzuführleitung (6), die in einer axialen Längsrichtung (X₁X₁) verläuft, und
a.2) wenigstens eine in einer axialen Längsrichtung (X₂X₂) geradlinig verlaufende Schwerkrafttrennleitung, die derart angeordnet ist, dass:
- ein erstes Ende (6-1) der Zuführleitung (6) mit wenigstens einem ersten Ende (7-1) wenigstens einer Trennleitung (7, 7a-7b) verbunden ist, und
- das zweite Ende (6-2) der Zuführleitung (6) mit einer ersten Austrittsöffnung (3a) eines ersten zylindrischen Sammelbehälters (3) verbunden ist, der sich vorzugsweise in einer axialen Längsrichtung (Y₁Y₁), welche senkrecht zu der axialen Längsrichtung (X₁X₁) der Zuführleitung ist, erstreckt, wobei das zweite Ende (7-2) einer jeden Trennleitung (7, 7a-7b) mit einer zweiten Eintrittsöffnung (4a) eines zweiten zylindrischen Sammelbehälters (4) verbunden ist, und
a.3) eine gekrümmte rohrförmige Vorrichtung (8), die geeignet ist, den Transfer des Fluids zwischen dem ersten Ende (6-1) der Zuführleitung (6) und jedem ersten Ende (7-1) einer jeden Trennleitung (7) des Trennmoduls (1a) zu ermöglichen, und
b) eine gemeinsame Sammelvorrichtung (1b), die durch einen auf dem Meeresgrund (30) ruhenden zweiten Sockel (9-2) getragen ist, wobei der zweite Sockel (9-2) am Meeresgrund durch Befestigung an einem Anker, vorzugsweise eine Befestigung an einem zweiten Pfeiler (20-2) vom Typ "Sauganker", der am Meeresgrund eingetrieben ist, verankert ist, wobei die gemeinsame Sammelvorrichtung (1b) eine erste Tragstruktur (2, 2a) umfasst, die durch den zweiten Sockel getragen ist und trägt:
b.1) den ersten zylindrischen Behälter (3), umfassend:
- wenigstens eine erste Eintrittsöffnung (3-1), die vorzugsweise im unteren Teil des ersten Behälters gelegen ist, wobei die erste Eintrittsöffnung (3-1) mit einer am Meeresgrund aufliegenden Unterwasserversorgungsleitung (5), welche den ersten Behälter mit Fluid beaufschlagt oder dazu bestimmt ist, verbunden ist oder dazu bestimmt ist, und
- eine Vielzahl von ersten Austrittsöffnungen (3a), wobei jede erste Austrittsöffnung (3a) ein erstes Verschlussventil (3a-1) umfasst oder damit zusammenwirkt, wobei wenigstens eine bestimmte (einige) von (den) erste(n) Austrittsöffnung(en) (3a) jeweils mit einem zweiten Ende (6-2) einer Zuführleitung (6) verbunden sind, wobei die ersten Austrittsöffnungen (3a) in der axialen Längsrichtung (Y₁Y₁) des ersten Behälters (3) nebeneinander angeordnet sind, und
b.2) einen zweiten Behälter (4), umfassend:
- eine Vielzahl von zweiten Eintrittsöffnungen (4a), wobei jede zweite Eintrittsöffnung (4a) ein zweites Verschlussventil (4a-1) umfasst oder damit zusammenwirkt, wobei wenigstens eine bestimmte (einige) von (den) zweite(n) Eintrittsöffnung(en) (4a) jeweils mit einem zweiten Ende (7-2) einer Trennleitung (7) verbunden ist (sind), wobei die zweiten Eintrittsöffnungen (4a) in der axialen Längsrichtung (Y₂Y₂) des zweiten Behälters (4) nebeneinander angeordnet sind, und
- wenigstens eine zweite obere Austrittsöffnung (4b-1), die mit einer ersten Exportpumpe (10a), welche mit einer ersten Abführleitung (10) verbunden ist oder dazu bestimmt ist, zusammenwirkt, und
- wenigstens eine zweite untere Austrittsöffnung (4b-2), die eine zweite Exportpumpe (11a), welche mit einer zweiten Abführleitung (11) verbunden ist oder dazu bestimmt ist, umfasst oder damit zusammenwirkt.

2. Modulare Vorrichtung zur Flüssig-Flüssig-Schwerkrafttrennung nach Anspruch 1, **dadurch gekennzeichnet, dass**:
- jede Schwerkrafttrennleitung in einer Längsrichtung (X₂X₂), die in einer gleichen Ebene wie die Längsrichtung (X₁X₁) der Zuführleitung gelegen ist, vorzugsweise parallel zu der Zuführleitung (6), geradlinig verläuft, und
- der zweite zylindrische Sammelbehälter (4) in einer axialen Längsrichtung (Y₂Y₂), die zu der axialen Längsrichtung (Y₁Y₁) des ersten Behälters parallel verläuft, angeordnet ist, und
- die Längsrichtungen (X₁X₁) aller Zuführleitungen parallel zueinander angeordnet sind, und
- die Längsrichtungen (X₂X₂) aller Trennleitungen (7) parallel zueinander angeordnet sind.

3. Modulare Vorrichtung zur Flüssig-Flüssig-Schwerkrafttrennung (1) nach Anspruch 1 oder 2, **dadurch gekennzeichnet, dass** die gemeinsame Sammelvorrichtung (1a) umfasst:
i) einen ersten Behälter (3), bei dem:
- die erste Eintrittsöffnung (3-1) einen ersten Eingangsleitungsabschnitt umfasst, dessen Ende, in fester Position gegenüber der ersten Tragstruktur (2, 2a) gehalten, ein erstes Anschlusselement (5a) umfasst, das an ein ergänzendes erstes Anschlusselement (5b) am Ende der Unterwasserversorgungsleitung (5) angeschlossen ist oder dazu bestimmt ist, wobei vorzugsweise der erste Eingangsleitungsabschnitt (3-1) ein erster starrer Leitungsabschnitt ist, dessen erstes Anschlusselement (5a) in fester Position an der Unterseite der ersten Tragstruktur (2, 2a) gehalten ist, und
- jede erste Austrittsöffnung (3a) einen ersten starren Ausgangsleitungsabschnitt umfasst, dessen Ende, in fester Position gegenüber der ersten Tragstruktur (2, 2a) gehalten, ein zweites Anschlusselement (3a-2) umfasst, das an ein ergänzendes zweites Anschlusselement (6-3) an einem zweiten Ende (6-2) der Zuführleitung (6) angeschlossen ist oder dazu bestimmt ist, und
ii) einen zweiten Behälter (4), bei dem:
- jede zweite Eintrittsöffnung (4a) einen zweiten starren Leitungsabschnitt umfasst, dessen Ende, in fester Position gegenüber der ersten Tragstruktur (2, 2a) gehalten, ein drittes Anschlusselement (4a-2) umfasst, das an ein ergänzendes drittes Anschlusselement (7-3) an einem zweiten Ende (7-2) der Trennleitung (7) angeschlossen ist oder dazu bestimmt ist, und
- jede zweite obere Austrittsöffnung (4b-1) mit einer ersten Pumpe (10a), die durch die erste Tragstruktur (2, 2a) getragen ist, verbunden ist, wobei die erste Pumpe (10a) über ein viertes Anschlusselement (10c) mit einer ersten Abführleitung (10) verbunden ist, vorzugsweise mittels eines ersten Abführleitungsabschnitts (10b), dessen Ende ein viertes Anschlusselement (10c) umfasst, wobei das vierte Anschlusselement (10c) in fester Position gegenüber der ersten Tragstruktur (2, 2a) gehalten ist, weiterhin vorzugsweise an der Unterseite der ersten Tragstruktur (2, 2a), wobei das vierte Anschlusselement (10c) an ein ergänzendes viertes Anschlusselement (10d) am Ende der ersten Abführleitung (10) angeschlossen ist oder dazu bestimmt ist, und
- jede zweite untere Austrittsöffnung (4b-2) mit einer zweiten Pumpe (11a), die durch die erste Tragstruktur (2, 2a) getragen ist, verbunden ist, wobei die zweite Pumpe (11a) über ein fünftes Anschlusselement mit einer zweiten Abführleitung (11) verbunden ist, vorzugsweise mittels eines zweiten Abführleitungsabschnitts (11 b), dessen Ende ein fünftes Anschlusselement (11d) umfasst, wobei das fünfte Anschlusselement (11d) in fester Position gegenüber der ersten Tragstruktur (2, 2a) gehalten ist, weiterhin vorzugsweise an der Unterseite der ersten Tragstruktur (2, 2a), wobei das fünfte Anschlusselement (11 d) an ein ergänzendes fünftes Anschlusselement (11d) des Endes einer zweiten Abführleitung (11) angeschlossen ist oder dazu bestimmt ist, und
- das erste, das vierte und das fünfte ergänzende Anschlusselement (5b, 10d, 11 d), die sich an den Enden der auf dem Meeresgrund aufliegenden Unterwasserversorgungsleitung (5) bzw. der ersten und zweiten Abführleitungen (10, 11) befinden, durch den zweiten Sockel (9-2) getragen sind und in fester Position an der Oberfläche einer ersten Plattform (9₂b) des zweiten Sockels (9-2) gehalten sind.

4. Modulare Vorrichtung zur Flüssig-Flüssig-Schwerkrafttrennung (1) nach einem der Ansprüche 1 bis 3, **dadurch gekennzeichnet, dass** die Zuführleitung (6) einen kleineren Durchmesser als die Trennleitung aufweist und oberhalb der Trennleitung angeordnet ist.

5. Modulare Vorrichtung zur Flüssig-Flüssig-Schwerkrafttrennung (1) nach einem der Ansprüche 1 bis 4, **dadurch gekennzeichnet, dass** das Trennmodul (1a) eine obere Zuführleitung (6), die oberhalb von wenigstens zwei unteren Trennleitungen (7a, 7b) angeordnet ist, umfasst.

6. Modulare Vorrichtung zur Flüssig-Flüssig-Schwerkrafttrennung (1) nach einem der Ansprüche 1 bis 5, **dadurch gekennzeichnet, dass** ein Trennmodul eine Zuführleitung (6) und eine Trennleitung (7), die in einer gleichen Tiefe nebeneinander angeordnet sind und einen gleichen Durchmesser aufweisen, umfasst.

7. Modulare Vorrichtung zur Flüssig-Flüssig-Trennung nach einem der Ansprüche 1 bis 6, **dadurch gekennzeichnet, dass** alle Trennmodule (1a, mᵢ) durch ein- und denselben ersten Sockel (9-1) getragen sind, wobei der erste Sockel (9-1) in einer Längsrichtung (Y₃Y₃) senkrecht zu den Längsrichtungen (XX', X₁X₁, X₂X₂) der Trennmodule (1a) verläuft und wobei der erste Sockel (9-1) in der Längsrichtung (XX') der Trennmodule in einem Abstand L1 von den ersten Enden (6-1, 7-1) der Trennmodule (1a) gelegen ist, der gleich einem Wert von 1/3 bis 1/2 der Gesamtlänge L der Trennmodule (1a) ausgehend von den ersten Enden (6-1, 7-1) der Trennmodule ist.

8. Modulare Vorrichtung zur Flüssig-Flüssig-Trennung nach einem der Ansprüche 1 bis 7, **dadurch gekennzeichnet, dass** das Trennmodul (1a) mechanische Verstärkungselemente (12) umfasst, die eine starre Verbindung zwischen der Zuführleitung (6) und der oder den Trennleitungen (7), vorzugsweise über deren gesamte Länge, sicherstellen.

9. Modulare Vorrichtung zur Flüssig-Flüssig-Trennung nach einem der Ansprüche 1 bis 8, **dadurch gekennzeichnet, dass** sie eine Zweigleitung ab der zweiten oberen Austrittsöffnung (4b-1) oder der ersten Abführleitung (10) und/oder eine Zweigleitung (17) ab der zweiten unteren Austrittsöffnung (4b-2) oder der zweiten Abführleitung (11), vorzugsweise mit Hilfe eines Dreiwegeventils (18), umfasst, um in eine auf dem Meeresgrund aufliegende Unterwasserversorgungsleitung (5), welche den ersten Behälter beaufschlagt, einen Anteil der aus der zweiten oberen Austrittsöffnung (4b-1) bzw. der zweiten unteren Austrittsöffnung (4b-2) austretenden Flüssigkeit zu überführen, weiterhin vorzugsweise dadurch, dass der Flüssigkeitsanteil in einen Mischer (19), welcher im Bereich der auf dem Meeresgrund aufliegenden Unterwasserversorgungsleitung (5) gelegen ist, überführt wird.

10. Vorrichtung nach einem der Ansprüche 1 bis 9, **dadurch gekennzeichnet, dass** der erste Sockel (9-1) mit ersten Zylindern (13) zusammenwirkt, die geeignet sind, die Horizontallage oder die Neigung der Trennmodule (1a) gegenüber der Horizontalen einzustellen, und/oder der zweite Sockel (9-2) mit zweiten Zylindern (14) zusammenwirkt, die geeignet sind, die Horizontallage oder die Neigung der Trennmodule und/oder die Horizontallage oder die Neigung des ersten und des zweiten Behälters (3, 4) gegenüber der Horizontalen einzustellen.

11. Verfahren zur Verwendung einer modularen Vorrichtung zur Flüssig-Flüssig-Schwerkrafttrennung nach einem der Ansprüche 1 bis 10, **dadurch gekennzeichnet, dass** die Trennung der Ölphase (10-1) und der wässrigen Phase (11-1) eines vorzugsweise teilweise oder vollständig entgasten Rohöls, das Sand enthalten kann, nach den folgenden aufeinanderfolgenden Schritten durchgeführt wird, bei denen:
1) der erste Behälter (3) mittels wenigstens einer auf dem Meeresgrund aufliegenden Unterwasserversorgungsleitung (5) mit Rohöl, das vorzugsweise teilweise oder vollständig in einer Flüssig-Gas-Trennvorrichtung entgast wird und von einem Schacht auf dem Meeresgrund stammt, beaufschlagt wird, wobei die auf dem Meeresgrund aufliegende Leitung (5) mit einer ersten Eintrittsöffnung (3-1) des ersten Behälters (3) verbunden ist, und
2) man das Rohöl von dem ersten Behälter (3) zu der Zuführleitung (6) strömen lässt, und
3) die Trennung einer oberen Ölphase und einer unteren wässrigen Phase, die Sand enthalten kann, durch Zirkulieren des Rohöls in jeder Trennleitung (7) vollzogen wird, und
4) das aus jeder Trennleitung austretende Zweiphasenfluid in Richtung einer zweiten Eintrittsöffnung (4a) des zweiten Behälters (4) abgeführt wird, und
5) die Ölphase von wenigstens einer zweiten oberen Austrittsöffnung (4b-1) aus, mittels wenigstens einer ersten Abführleitung (10), vorzugsweise bis hin zu einem schwimmenden Träger an der Oberfläche, mit Hilfe einer ersten Pumpe (10a) abgeführt wird, und
6) die wässrige Phase von wenigstens einer zweiten unteren Austrittsöffnung (4b-2) aus, mittels wenigstens einer zweiten Abführleitung (11), mit Hilfe einer zweiten Pumpe (11a), vorzugsweise zu einem Schacht am Meeresgrund, in den das Wasser der wässrigen Phase wieder eingeleitet wird, abgeführt wird.

12. Verwendungsverfahren nach Anspruch 11, wobei eine modulare Vorrichtung zur Flüssig-Flüssig-Trennung eingesetzt wird, von der wenigstens eine erste Austrittsöffnung (3a) und eine zweite Eintrittsöffnung (4a), welche geeignet sind, an ein gleiches Trennmodul angeschlossen zu werden, geschlossen sind und nicht an ein Trennmodul (1a) angeschlossen sind, **dadurch gekennzeichnet, dass** nach Durchführen der Schritte 1) bis 6) die folgenden aufeinanderfolgenden Schritte durchgeführt werden, bei denen:
7.1) ein Trennmodul (1a) hinzugefügt wird, das von der Oberfläche aus herabgelassen wird und von dem die zweiten Enden (6-2, 7-2) der Zuführleitung (6) bzw. der Trennleitung (7) an die erste Austrittsöffnung (3a) bzw. die zweite Eintrittsöffnung (4a), die nicht belegt sind, angeschlossen werden, anschließend
8.1) die Verschlussventile (3a-1 und 4a-1) der ersten Austrittsöffnung (3a) und zweiten Eintrittsöffnung (4a) geöffnet werden.

13. Verwendungsverfahren nach Anspruch 11, wobei eine modulare Vorrichtung zur Flüssig-Flüssig-Trennung (1) mit mehr als zwei Trennmodulen (1 a) eingesetzt wird, **dadurch gekennzeichnet, dass** nach Durchführen der Schritte 1) bis 6) die folgenden aufeinanderfolgenden Schritte durchgeführt werden, bei denen:
7.2) die Verschlussventile (3a-1, 4a-1) einer ersten Austrittsöffnung (3a) und wenigstens einer zweiten Eintrittsöffnung (4a), die an ein gleiches Trennmodul (1a) angeschlossen sind, wieder geschlossen werden, und
8.2) das Trennmodul, das an die erste Austrittsöffnung und die zweite Eintrittsöffnung, deren Ventile geschlossen sind, angeschlossen ist, gelöst wird, anschließend das gelöste Trennmodul wieder an die Oberfläche heraufgebracht wird.

14. Verwendungsverfahren nach Anspruch 11, **dadurch gekennzeichnet, dass** bei den Schritten 5) und/oder 6) ein Anteil der mittels der zweiten oberen Austrittsöffnung (4b-1) und/oder der zweiten unteren Austrittsöffnung (4b-2) abgeführten Flüssigkeit entnommen wird, der an der Unterwasserversorgungsleitung (5) wieder eingeleitet wird, um den Flüssigkeitsanteil mit dem Versorgungsrohöl zu mischen und somit den Wasseranteil des in die modulare Trennvorrichtung (1) eintretenden Rohöls zu verändern.

15. Verwendungsverfahren nach Anspruch 11, **dadurch gekennzeichnet, dass** nach Durchführen einer Trennung gemäß den Schritten 1) bis 6) die Reinigung wenigstens eines Trennmoduls (1a) durchgeführt wird, um den Sand, der sich eventuell auf dem Boden seiner Trennleitung abgesetzt hat, durch Durchführen der folgenden aufeinanderfolgenden Schritte abzuführen, bei denen:
7.3) die Verschlussventile (3a-1, 4a-1) der ersten Austrittsöffnungen (3a) und/oder zweiten Eintrittsöffnungen (4a) des oder der zu reinigenden Trennmodule (1a) geöffnet werden und die Verschlussventile der ersten Austrittsöffnungen (3a) und/oder der zweiten Eintrittsöffnungen (4a), an die die anderen Trennmodule (1 a) in größerer Anzahl als die zu reinigenden Trennmodule angeschlossen sind, geschlossen werden, wobei vorzugsweise ein einziges Trennmodul (1a) zu reinigen ist und in offener Verbindung mit den ersten Austrittsöffnungen und zweiten Eintrittsöffnungen gehalten ist, und
8.3) man das Rohöl ausschließlich in dem oder den zu reinigenden Trennmodulen mit einem erhöhten Durchsatz strömen lässt, und
9.3) das gesamte Fluid, das aus dem zweiten Behälter (4) austritt, mittels der zweiten oberen Austrittsöffnung (4b-1) zur Oberfläche befördert wird, wobei die zweite Pumpe (11a), die mit der zweiten unteren Austrittsöffnung (4b-2) zusammenwirkt, nicht aktiviert ist.

16. Verfahren zur Installation einer modularen Vorrichtung zur Flüssig-Flüssig-Schwerkrafttrennung nach einem der Ansprüche 1 bis 10, auf dem Meeresgrund, **dadurch gekennzeichnet, dass** die folgenden Schritte durchgeführt werden, bei denen:
1) von der Oberfläche aus eine gemeinsame Sammelvorrichtung (1 b) herabgelassen wird, die auf einem am Meeresgrund verankerten zweiten Sockel (9-2) abgesetzt wird, und die erste Eintrittsöffnung (3-1) sowie die zweite obere Austrittsöffnung (4b-1) und untere Austrittsöffnung (4b-2) an die erste und die zweite Abführleitung (10, 11) angeschlossen werden, und
2) von der Oberfläche aus wenigstens ein Trennmodul (1 a) herabgelassen wird, das auf einem am Meeresgrund verankerten ersten Sockel (9-1) abgesetzt wird, und die zweiten Enden (6-2, 7-2) der Zuführleitung und der Trennleitung mit den ersten Austrittsöffnungen (3a) bzw. zweiten Eintrittsöffnungen (4a) der gemeinsamen Sammelvorrichtung (1b) verbunden werden.

## Claims

1. A modular device (1) for liquid/liquid gravity separation of two liquid phases of different densities from a liquid fluid, more preferably the aqueous phase (11-1) and the oil phase (10-1) of a crude oil that has preferably been degassed in part or in full, said modular separation device resting on the sea bottom (30), preferably at great depth of at least 1000 m, the device being **characterized in that** it comprises:
a) at least one separation module (1a), preferably a plurality of n separation modules, n preferably being an integer in the range 5 to 10, each said separation module (1a) being supported by at least a first base (9-1) resting on the sea bottom, said first base (9-1) being anchored to the sea bottom by being fastened on an anchor, preferably fastened on a first pile (20-1) of the "suction anchor" type embedded in the sea bottom, each separation module comprising:
a.1) a fluid delivery pipe (6) extending in an axial longitudinal direction X₁X₁; and
a.2) at least one gravity separation pipe extending in rectilinear manner in an axial longitudinal direction X₂X₂, and arranged in such a manner that:
• a first end (6-1) of said delivery pipe (6) is connected to at least one first end (7-1) of at least one separation pipe (7, 7a-7b); and
• the second end (6-2) of said delivery pipe (6) is connected to a first outlet orifice (3a) of a first cylindrical manifold tank (3) preferably extending in an axial longitudinal direction Y₁Y₁ perpendicular to the axial longitudinal direction X₁X₁ of said delivery pipe, the second end (7-2) of each separation pipe (7, 7a-7b) being connected to a second inlet orifice (4a) of a second cylindrical manifold tank (4); and
a.3) a tubular bend device (8) suitable for enabling said fluid to be transferred between said first end (6-1) of said delivery pipe (6) and each said first end (7-1) of each said separation pipe (7) of said separation module (1a); and
b) a common manifold device (1b) supported by a second base (9-2) resting on the sea bottom (30), said second base (9-2) being anchored to the sea bottom by being fastened on an anchor, preferably being fastened on a second pile (20-2) of the "suction anchor" type embedded in the sea bottom, said common manifold device (1b) having a first support structure (2, 2a) supported by said second base and supporting:
b.1) said first cylindrical tank (3) comprising:
• at least one first inlet orifice (3-1), preferably situated in a low portion of said first tank, said first inlet orifice (3-1) being connected or for connection to an undersea feed pipe resting on the sea bottom (5) feeding or for feeding said first tank with said fluid; and
• a plurality of said first outlet orifices (3a), each said first outlet orifice (3a) including or co-operating with a first closure valve (3a-1), at least one said first outlet orifice (3a) being connected to a respective said second end (6-2) of a said delivery pipe (6), said first outlet orifices (3a) being arranged side by side in the longitudinal axial direction Y₁Y₁ of said first tank (3); and
b.2) a said second tank (4) comprising:
• a plurality of second inlet orifices (4a), each said second inlet orifice (4a) including or co-operating with a second closure valve (4a-1), at least one said second inlet orifice (4a) being connected to a respective said second end (7-2) of a separation pipe (7), said second inlet orifices (4a) being arranged side by side in the axial longitudinal direction Y₂Y₂ of said second tank (4);
• at least one upper second outlet orifice (4b-1) co-operating with a first export pump (10a) connected or for connection to a first removal pipe (10); and
• at least one lower second outlet orifice (4b-2) comprising or co-operating with a second export pump (11a) connected or for connection to a second removal pipe (11).

2. A modular liquid/liquid gravity separation device according to claim 1, **characterized in that**:
• each said gravity separation pipe extends in rectilinear manner in a longitudinal direction X₂X₂ situated in a plane common with the longitudinal direction X₁X₁ of said delivery pipe, preferably parallel to said delivery pipe (6);
• said second cylindrical manifold tank (4) is arranged in an axial longitudinal direction Y₂Y₂ parallel to said axial longitudinal direction Y₁Y₁ of said first tank;
• the longitudinal directions X₁X₁ of all of said delivery pipes are arranged mutually in parallel; and
• the longitudinal directions X₂X₂ of all of said separation pipes (7) are arranged mutually in parallel.

3. A modular liquid/liquid gravity separation device (1) according to claim 1 or claim 2, **characterized in that** said common manifold device (1a) comprises:
i) a said first tank (3) in which:
• said first inlet orifice (3-1) includes a first inlet pipe portion having an end held in a stationary position relative to said first support structure (2, 2a) that includes a first coupler element (5a) coupled or for coupling to a first complementary coupler element (5b) at the end of said feed undersea pipe (5), said first inlet pipe portion (3-1) preferably being a rigid first pipe portion with its said first coupler element (5a) being held in a stationary position at the underface of said first support structure (2, 2a); and
• each said first outlet orifice (3a) includes a rigid first outlet pipe portion with an end held in a position that is stationary relative to said first support structure (2, 2a) having a second coupler element (3a-2) coupled or for coupling to a second complementary coupler element (6-3) at a said second end (6-2) of a delivery pipe (6); and
ii) a said second tank (4) in which:
• each said second inlet orifice (4a) has a second rigid pipe portion with an end held in a position that is stationary relative to said first support structure (2, 2a) and includes a third coupler element (4a-2) coupled or for coupling to a third complementary coupler element (7-3) at a said second end (7-2) of a separation pipe (7);
• each said upper second outlet orifice (4b-1) is connected to a said first pump (10a) supported by said first support structure (2, 2a), said first pump (10a) being connected by a fourth coupler element (10c) to a said first removal pipe (10), preferably via a first removal pipe portion (10b) having an end including a said fourth coupler element (10c), said fourth coupler element (10c) being held in a position that is stationary relative to said first support structure (2, 2a), more preferably at the underface of said first support structure (2, 2a), said fourth coupler element (10c) being coupled or for coupling to a fourth complementary coupler element (10c) at the end of said first removal pipe (10);
• each said lower second outlet orifice (4b-2) is connected to a second pump (11a) supported by said first support structure (2, 2a), said second pump (11a) being connected by a fifth coupler element to a said second removal pipe (11), preferably via a second removal pipe portion (11b) having an end including a said fifth coupler element (11d), said fifth coupler element (11d) being held in a position that is stationary relative to said first support structure (2, 2a), more preferably at the underface of said first support structure (2, 2a), said fifth coupler element (11d) being connected or for connection to a fifth complementary element (11d) at the end of a said second removal pipe (11); and
• said first, fourth, and fifth complementary coupler elements (5b, 10d, 11d) situated at the ends of said feed undersea pipe resting on the sea bottom (5) and respectively of said first and second removal pipes (10, 11) are supported by said second base (9-2) and are held in a stationary position at the surface of a first platform (9₂B) of said second base (9-2).

4. A modular liquid/liquid gravity separation device (1) according to any one of claims 1 to 3, **characterized in that** said delivery pipe (6) presents a diameter smaller than the diameter of the separation pipe and is arranged above the separation pipe.

5. A modular liquid/liquid gravity separation device (1) according to any one of claims 1 to 4, **characterized in that** said separation module (1a) comprises an upper feed pipe (6) arranged above at least two lower separation pipes (7a, 7b).

6. A modular liquid/liquid gravity separation device (1) according to any one of claims 1 to 5, **characterized in that** a said separation module comprises a said feed pipe (6) and a said separation module (7) arranged side by side at a common depth and having the same diameter.

7. A modular liquid/liquid gravity separation device according to any one of claims 1 to 6, **characterized in that** all of said separation modules (1a, mᵢ) are supported by a single said base (9-1) in common, said first base (9-1) extending in a longitudinal direction Y₃Y₃ perpendicular to the longitudinal directions XX', X₁X₁, X₂X₂ of said separation modules (1a), and said first base (9-1) being situated in the longitudinal direction XX' of said separation modules at a distance L1 from said first ends (6-1, 7-1) of said separation modules (1a) equal to a value lying in the range 1/3 to 1/2 of the total length L of said separation modules (1a) from said first ends (6-1, 7-1) of said separation modules.

8. A modular liquid/liquid gravity separation device according to any one of claims 1 to 7, **characterized in that** said separation module (1a) includes mechanical reinforcing elements (12) providing a rigid connection between said delivery pipe (6) and said separation pipe(s) (7), preferably over their entire length.

9. A modular liquid/liquid gravity separation device according to any one of claims 1 to 8, **characterized in that** it includes a branch pipe from said upper second outlet orifice (4b-1) or from said first removal pipe (10), and/or a branch pipe (17) from said lower second outlet orifice (4b-2) or said second removal pipe (11), preferably with the help of a three-port valve (18), so as to transfer into a said undersea feed pipe resting on the sea bottom (5) and feeding said first tank a fraction of the liquid leaving said upper second outlet orifice (4b-1) or respectively said lower second outlet orifice (4b-2), and more preferably while transferring said liquid fraction via a mixer (19) situated at the level of said undersea feed pipe resting on the sea bottom (5).

10. A device according to any one of claims 1 to 9, **characterized in that** said first base (9-1) co-operates with first actuators (13) suitable for adjusting the horizontal position or the angle of inclination of said separation modules (1a) relative to the horizontal, and/or said second base (9-2) co-operates with second actuators (14) suitable for adjusting the horizontal position or the angle of inclination of said separation modules and/or the horizontal position or the angle of inclination of said first and second tanks (3, 4) relative to the horizontal.

11. A method of using a modular liquid/liquid gravity separation device according to any one of claims 1 to 10, the method being **characterized in that** the oil phase (10-1) and the aqueous phase (11-1) of a crude oil, which has preferably been degassified in full or in part and which may contain sand, are separated by performing the following successive steps:
1) feeding crude oil to said first tank (3) from at least one said undersea feed pipe (5) resting on the sea bottom, which crude oil has preferably been degassed in full or in part in a liquid/gas separator device and comes from a well in the sea bottom, said pipe resting on the sea bottom (5) being connected to a said first inlet orifice (3-1) of said first tank (3);
2) causing said crude oil to flow from said first tank (3) to said delivery pipe (6);
3) separating an upper oil phase and a lower aqueous phase, possibly containing sand, by causing said crude oil to flow within each said separation module (7);
4) removing the two-phase fluid leaving each said separation pipe via a said second inlet orifice (4a) of said second tank (4);
5) removing said oil phase from at least one said upper second outlet orifice (4b-1) via at least one said first removal pipe (10), preferably to a support floating on the surface, with the help of a said first pump (10a); and
6) removing said aqueous phase from at least one said lower second outlet orifice (4b-2) via at least one second removal pipe (11) with the help of a said second pump (11a), preferably to a well in the sea bottom into which the water of said aqueous phase is reinjected.

12. A method of use according to claim 11, wherein use is made of a modular liquid/liquid separation device in which at least one said first outlet orifice (3a) and at least one said second inlet orifice (4a) that are suitable for being connected to a common separation module are closed and not connected to a said separation module (1a), the method being **characterized in that** after performing the steps 1) to 6), the following successive steps are performed:
7.1) adding a said separation module (1a) that is lowered from the surface and that has said second ends (6-2, 7-2) of said delivery pipe (6) and respectively of said separation pipe (7) coupled to said unoccupied first outlet orifice (3a) and respectively to said unoccupied second inlet orifice (4a); and then
8.1) opening said closure valves (3a-1 and 4a-1) of said first outlet orifice (3a) and of said second inlet orifice (4a) .

13. A method of use according to claim 1, wherein use is made of a modular liquid/liquid separation device (1) having more than two separation modules (1a), the method being **characterized in that** after performing the steps 1) to 6), the following successive steps are performed:
7.2) closing said closure valves (3a-1, 4a-1) of a first said outlet orifice (3a) and of at least one second said inlet orifice (4a) coupled to a common separation module (1a), and
8.2) separating said separation module coupled to said first outlet orifice and said second inlet orifice having their valves closed, and then raising said separated separation module to the surface.

14. A method of use according to claim 11, **characterized in that** in steps 5) and/or 6), a fraction of the liquid removed from said upper second outlet orifice (4b-1) and/or respectively from said lower second outlet orifice (4b-2) is taken and reinjected into said feed undersea pipe (5) for mixing said liquid fraction with the feed crude oil, thereby modifying the water cut of the crude oil entering in said modular separation device (1).

15. A method of use according to claim 11, characterized it that after performing separation in accordance with steps 1) to 6), at least one separation module (1a) is cleaned in order to remove any sand that might be deposited on the bottom of its said separation pipe, the cleaning being performed by implementing the following successive steps:
7.3) opening said closure valves (3a-1, 4a-1) of said first outlet orifices (3a) and/or said second inlet orifices (4a) of the separation module (s) (1a) for cleaning and closing the closure valves of said first outlet orifices (3a) and/or of said second inlet orifices (4a) to which the other separation modules (1a) are connected, which other modules are greater in number than the separation modules for cleaning, with preferably only one separation module (1a) being for cleaning and maintained in open communication with said first outlet orifices and said second inlet orifices;
8.3) causing said crude oil to flow at an accelerated rate exclusively within said separation module(s) for cleaning; and
9.3) sending to the surface via said upper second outlet orifice (4b-1) all of the fluid leaving said second tank (4), said second pump (11a) co-operating with said lower second outlet orifice (4b-2) not being activated.

16. A method of installing a modular liquid/liquid gravity separation device according to any one of claims 1 to 10 on the sea bottom, the method being **characterized in that** the following steps are performed:
1) lowering a said common manifold device (1b) from the surface and placing it on a said second base (9-2) anchored to the sea bottom, and coupling said first inlet orifice (3-1) and said upper and lower second outlet orifices (4b-1, 4b-2) to said first and second removal pipes (10, 11); and
2) lowering a said separation module (1a) from the surface and placing it on a first base (9-1) anchored to the sea bottom, and coupling said second ends (6-2, 7-2) of said feed pipe and of said separation pipe with said first outlet orifices (3a) and respectively with said second inlet orifices (4a) of said common manifold device (1b).
